# EUROPEAN PATENT SPECIFICATION

(11) **EP 4 395 048 B1**
(45) Date of publication and mention of the grant of the patent: **22.04.2026**
(21) Application number: 21966704.5
(22) Date of filing: 08.12.2021
(51) Int. Cl.: H01M 10/04, H01M 50/533, H01M 50/536

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(43) Date of publication of application: 03.07.2024
(60) Divisional application: 26164104.7
(73) Proprietor: Dongguan Amperex Technology Limited, Dongguan City, Guangdong Province 523000 (CN)
(72) Inventor: YAN, Dongyang, Dongguan, Guangdong 523000 (CN); YANG, Hongzhan, Dongguan, Guangdong 523000 (CN); DONG, Yuyang, Dongguan, Guangdong 523000 (CN)
(74) Representative: Icosa
(86) International application number: PCT/CN2021/136523
(87) International publication number: WO 2023/102780

(56) References cited:
- CN-A- 104 600 250
- CN-A- 105 990 612
- CN-U- 206 379 431
- CN-U- 213 483 772
- CN-U- 214 589 165
- JP-A- 2003 068 271
- US-A1- 2018 190 963
- US-A1- 2020 313 196

## Description

### TECHNICAL FIELD

This invention relates to the field of energy storage technologies, and in particular, to an electrochemical apparatus and an electronic apparatus including such electrochemical apparatus.

### BACKGROUND

Electrochemical apparatuses (for example, batteries) are widely used in electronic products such as electronic mobile devices, electric tools, and electric vehicles, and increasingly high requirements are imposed on safety performance of the electrochemical apparatuses.

During high-rate charging, an electrochemical apparatus is likely to continuously produce heat and have a temperature rise due to factors such as its internal resistance and polarization accumulation caused by charging. This may accelerate aging of the electrochemical apparatus as well as deterioration of capacity and power performance, and may also cause volumetric expansion, deformation, or the like, affecting the service life of a product. CN105990612; CN206379431, CN214589165 and US2018/190963 illustrate electrochemical apparatuses

### SUMMARY

In view of the deficiencies of the prior art, it is necessary to propose an electrochemical apparatus that can solve the problem of temperature rise during charging.

It is also necessary to provide an electronic apparatus including such electrochemical apparatus.

The present invention provides an electrochemical apparatus including an electrode assembly and a first conductive plate. The electrode assembly is of a wound structure and includes a first electrode plate. The first electrode plate includes a first conductive layer and a first conductive material layer. The first conductive layer includes a first surface and a second surface opposite to each other. The first conductive material layer is provided on the first surface. The first surface includes a first region, the first conductive material layer includes a first conductive material region, the first conductive material region encloses a first recess, and the first region is exposed from the first recess. The first conductive plate is connected to the first region and extends out of the first electrode plate. The first conductive plate includes a third region and a fourth region connected to each other. A direction perpendicular to the third region is a first direction, and in the first direction, a projection of the third region is located in a projection of the first region, and a projection of the fourth region is located outside the projection of the first region. The third region includes a connection region, and the first conductive plate is connected to the first region through the connection region. Viewed from the first direction, the third region includes a first side, a second side, a third side, and a fourth side, the first side and the second side being opposite to each other, the third side and the fourth side being opposite to each other, and the fourth side being connected to the fourth region. The first region includes a fifth side, a sixth side, and a seventh side. An extension direction of the third region is a second direction, and in the second direction, the seventh side and the third side are arranged in sequence and the seventh side (2103) and the third side (3103) at least partially face each other. In a third direction, the fifth side, the first side, the second side, and the sixth side are arranged in sequence. The first direction, the second direction, and the third direction are perpendicular to each other. a size of the third region in the third direction is T₁, a size of the third region in the second direction is T₂, an area of the projection of the third region in the first direction is S₁, an area of a projection of the connection region in the first direction is S₂, a distance between the first side and the fifth side is J₁, a distance between the second side and the sixth side is J₂, and a distance between the third side and the seventh side is J₃, where S₂/S₁ + (J₁ + J₂ + J₃)/(T₁ + T₂) ≥ 30%, characterized in that the first region is provided with a third recess at an edge in the second direction; the first conductive material region comprises a first extension region and a second extension region extending toward the third recess; and viewed from the first direction, the first extension region and the second extension region are disposed on two sides of the third recess.

S₂/S₁ may reflect a proportion of a current pass area of the first conductive plate. When S₂/S₁ is large, the current pass area of the first conductive plate increases, and current is distributed more dispersedly and uniformly on the first conductive plate during charging of the electrochemical apparatus, allowing for more dispersive heat production at the first conductive plate during large-current charging, thereby reducing the risk of local overheating of the first conductive plate. Moreover, (J₁ + J₂ + J₃)/(T₁ + T₂) may reflect a proportion of a heat dissipation area in the first region. When (J₁ + J₂ + J₃)/(T₁ + T₂) is large, the heat dissipation area of the first conductive plate increases, reducing a temperature rise during large-current charging. Therefore, a sum of S₂/S₁ and (J₁ + J₂ + J₃)/(T₁ + T₂) is defined to be ≥ 30%, improving the safety and reliability of the electrochemical apparatus.

In some possible implementations, the first electrode plate further includes a second conductive material layer provided on the second surface. The second surface includes a second region, the second conductive material layer includes a second conductive material region, the second conductive material region encloses a second recess, and the second region is exposed from the second recess. In the first direction, the projection of the first region and a projection of the second region at least partially overlap. Thus, heat produced at the first conductive plate may not only be dissipated through the first region exposed from the first conductive plate but also be transferred to the second region through overlapping portions of the first region and second region and dissipated through the second region, thereby further improving the heat dissipation efficiency.

In some possible implementations, the electrochemical apparatus further includes a first layer adhered to the third region, where the first layer contains an insulating material. In the first direction, the projection of the third region is located in a projection of the first layer. The first layer may reduce the risk of generation of a short circuit caused when a burr or welding mark of the connection region punctures a separator, and may also be configured to compensate for a reduced thickness of a position where the first recess is provided on the first conductive material layer, allowing the electrochemical apparatus to have a more uniform overall thickness.

In some possible implementations, the first layer is further adhered to the first conductive material region. In the first direction, the projection of the first region is located in the projection of the first layer.

In some possible implementations, the electrochemical apparatus further includes a second layer, where the second layer contains a first insulating material. The second layer is adhered to the second conductive material region. In the first direction, the projection of the second region is located in a projection of the second layer. The second layer may be configured to compensate for a reduced thickness of a position where the second recess is provided on the second conductive material layer. In some possible implementation, viewed from the first direction, the first layer includes an eighth side. In the second direction, the seventh side is disposed between the eighth side and the third side. A distance between an edge of the first region in the second direction and the eighth side is L₁, and a distance between the seventh side and the eighth side is L₃, where L₃/L₁ ≤ 30%. Thus, in the second direction, a size of the first conductive material region covered by the first layer is reduced, that is, an active material covered by the first layer and unlikely to contribute to capacity is reduced, thereby reducing the impact of the first layer on the capacity of the electrochemical apparatus.
In some possible implementations, a distance between an edge of the first region in the second direction and the eighth side is L₁, the first extension region and the second extension region have a same size of L₂ in the second direction, and a distance between the seventh side and the eighth side is L₃, where (L₂ + L₃)/L₁ ≤ 30%. Thus, in the second direction, a size of the first conductive material region covered by the first layer is reduced, that is, an active material covered by the first layer and incapable of contributing to capacity is reduced, thereby reducing the impact of the first layer on the capacity of the electrochemical apparatus.

In some possible implementations, a size of the first extension region in the third direction is W₁, and a size of the second extension region in the third direction is W₂, where (W₁ + W₂)/T₁ ≥ 20%. Thus, reduction of the heat dissipation area of the first region caused by provision of the third recess is alleviated.

In some possible implementations, a size of the first extension region in the third direction is W₁, a size of the second extension region in the third direction is W₂, a distance between the first extension region and the first conductive plate in the third direction is W₃, and a distance between the second extension region and the first conductive plate in the third direction is W₄. In some possible implementations, W₃ < W₁. In some possible implementations, W₂ < W₄. In some possible implementations, W₃ < W₄.

In some possible implementations, in the third direction, the first extension region and the second extension region respectively include a ninth side and a tenth side. The first region is connected to the ninth side and the tenth side. The ninth side and the tenth side are in a straight line shape or an arc shape.

In some possible implementations, in the second direction, the first extension region and/or the second extension region has a size of L₂, and a distance between the ninth side and the fourth side is L₄, where L₂ < L₄. The relatively large L₄ helps to further increase the heat dissipation area of the first conductive plate, thereby reducing a temperature rise during large-current charging.

In some possible implementations, L₁ ranges from 10 mm to 50 mm and/or in the second direction, an edge of at least one of the first layer or the second layer extends beyond an edge of the first electrode plate. When L₁ is large, the first conductive material layer covered by the first layer in the second direction has a relatively large size, and therefore has a greater impact on the capacity of the electrochemical apparatus. When L₁ is small, the first region also has a small size in the second direction, so that the distance J₃ between the third side and the seventh side is also small, and thus heat dissipation capability of the first region is also reduced.

In some possible implementations, the electrochemical apparatus further includes a third layer and a fourth layer, where the third layer and the fourth layer each contain a second insulating material. In the first direction, the first layer is disposed between the first conductive plate and the third layer, and the second layer is disposed between the first conductive plate and the fourth layer. The third layer and the fourth layer may further compensate for the reduced thickness of the electrode plate at the first recess and the second recess. When the first electrode plate is a negative electrode plate and the second electrode plate is a positive electrode plate, the third layer may also be configured to hinder movement, toward the second recess, of lithium ions deintercalated from a part of the third conductive material layer corresponding to the third layer in the first direction, thereby reducing the risks of excessive accumulation of lithium ions and formation of lithium dendrites due to the lack of lithium ions that may be embedded in the second recess. Similarly, the fourth layer may also reduce the risk of formation of lithium dendrites.

In some implementations, the electrode assembly further includes a second electrode plate, and at least one of the third layer or the fourth layer is adhered to the second electrode plate. Thus, the third layer and the fourth layer are fixed in the electrochemical apparatus and serves to compensate for thickness or reduce the risk of formation of lithium dendrites.

In some possible implementations, the connection region is welded to the first region, thereby providing a higher connection strength between the first conductive plate and the first region. The connection region includes a plurality of welding spots. The area S₂ is a sum of projection areas of a plurality of welding spots in the first direction.

In some possible implementations, the electrode assembly further includes a second electrode plate and a separator. The first electrode plate, the separator, and the second electrode plate are stacked and wound to form the electrode assembly. In the winding direction, the electrode assembly includes a first section, a first bent section, a second section, and a second bent section connected in sequence. The first conductive plate is located in the first section, thereby improving the flatness of the first conductive plate when the first conductive plate is connected to the first region.

In some possible implementations, the apparatus further comprises a housing, wherein the housing includes a body for accommodating the electrode assembly and a sealing edge connected to the body. The sealing edge includes a polymer layer, and the fourth region extends out of the housing from the polymer layer.

The present invention further provides an electronic apparatus including the foregoing electrochemical apparatus.

### BRIEF DESCRIPTION OF DRAWINGS

FIG. 1 is a schematic diagram of an overall structure of an electrochemical apparatus according to an embodiment.
FIG. 2 is a schematic structural diagram of the electrochemical apparatus shown in FIG. 1 before packaging.
FIG. 3A is a top view of an electrode assembly of the electrochemical apparatus shown in FIG. 1.
FIG. 3B is a schematic diagram of preparation of an sealing edge of a housing of the electrochemical apparatus shown in FIG. 1.
FIG. 4 is an enlarged view of the electrode assembly at position IV shown in FIG. 3A.
FIG. 5 is an enlarged view of the electrode assembly at position V shown in FIG. 3A.
FIG. 6 is a schematic structural diagram of front and rear surfaces of an unfolded first electrode plate of the electrode assembly shown in FIG. 3A.
FIG. 7 is a front view of a joint between a first conductive plate and the first electrode plate shown in FIG. 3A.
FIG. 8A is a front view after a first layer on the first electrode plate shown in FIG. 7 is removed.
FIG. 8B is a front view after a first layer on the first electrode plate shown in FIG. 7 is removed.
FIG. 8C is a schematic view of a projection of a third region of a first conductive plate shown in FIG. 8B.
FIG. 8D is a schematic view of a projection of a connection region of the third region shown in FIG. 8B.
FIG. 9 is a front view of a joint between a first electrode plate and a first conductive plate of an electrochemical apparatus according to another embodiment.
FIG. 10A is a front view after a first layer on the first electrode plate shown in FIG. 9 is removed.
FIG. 10B is a front view after a first layer on the first electrode plate shown in FIG. 9 is removed according to some other embodiments.
FIG. 10C is a front view after a first layer on the first electrode plate shown in FIG. 9 is removed according to some other embodiments.
FIG. 10D is a front view after a first layer on the first electrode plate shown in FIG. 9 is removed according to some other embodiments.
FIG. 10E is a front view after a first layer on the first electrode plate shown in FIG. 9 is removed according to some other embodiments.
FIG. 11 is a front view of a joint between a first electrode plate and a first conductive plate according to some other embodiments.
FIG. 12 is a front view after a first layer on the first electrode plate shown in FIG. 11 is removed.
FIG. 13 is a front view of a joint between a first electrode plate and a first conductive plate of an electrochemical apparatus according to another embodiment.
FIG. 14 is a schematic diagram of an overall structure of an electronic apparatus according to an embodiment.

### DESCRIPTION OF EMBODIMENTS

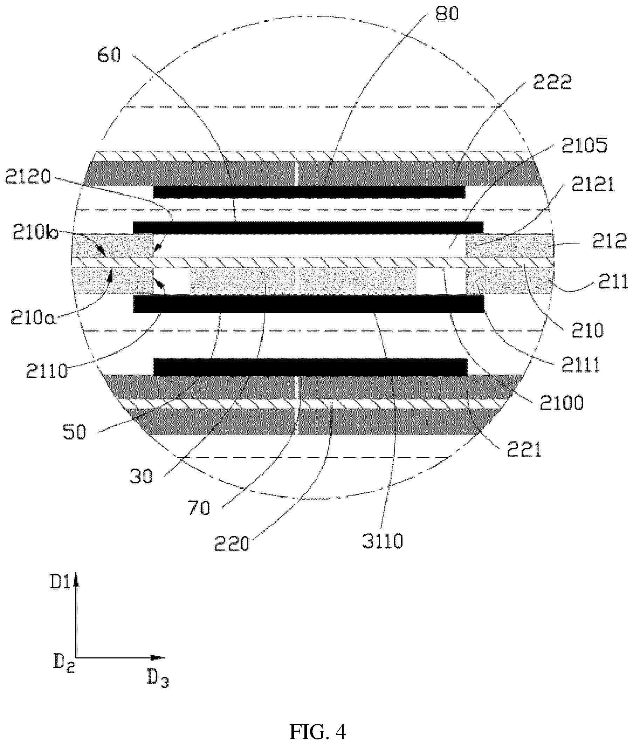

FIG. 4, FIG. 5, FIG. 6, FIG. 7, FIG. 8A, FIG. 8B, are not according to the invention and are present for illustration purposes only.

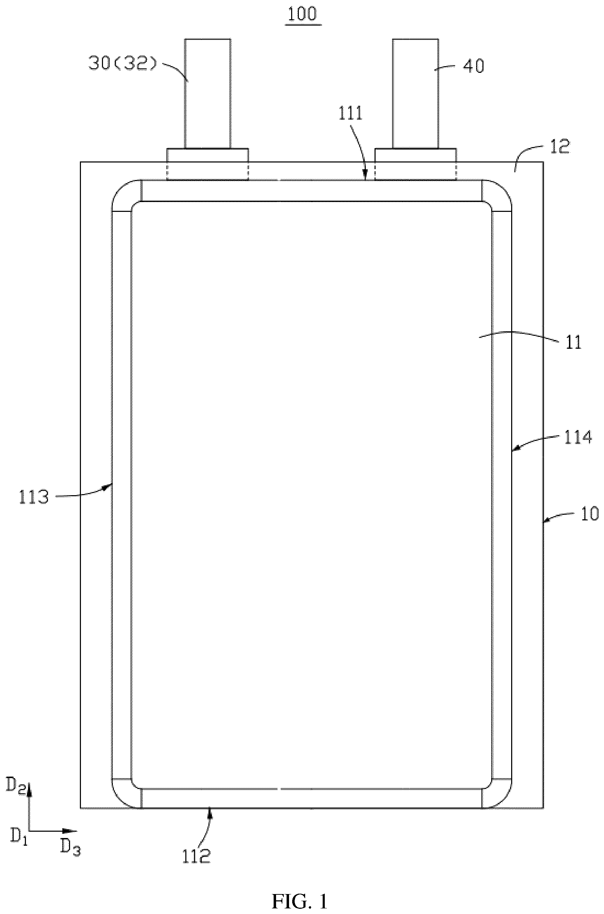

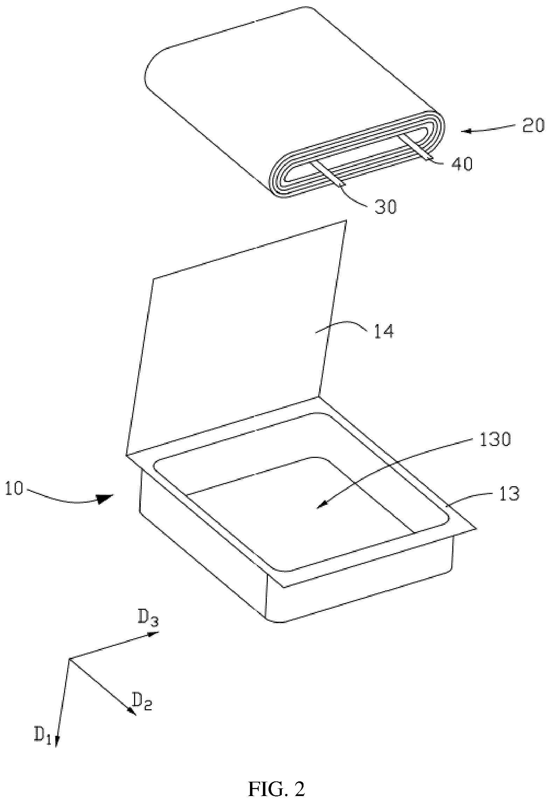

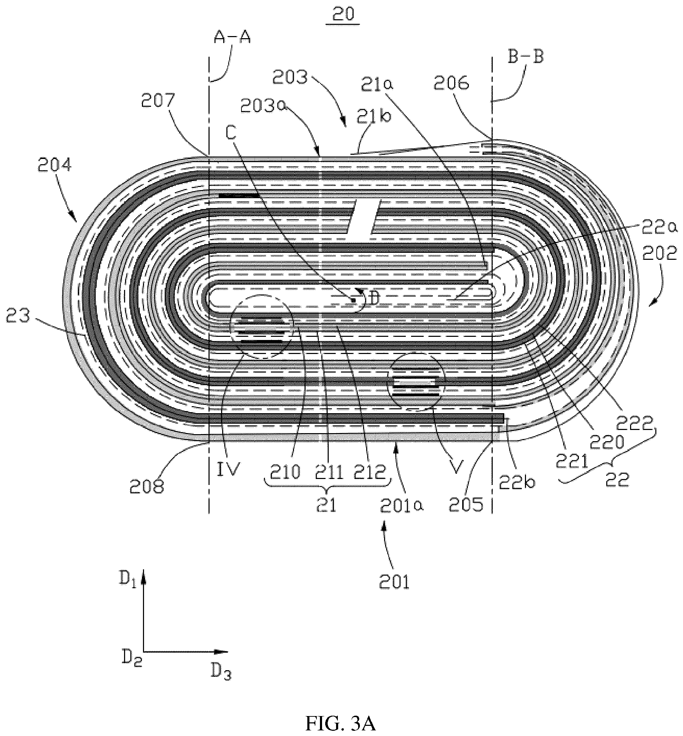

Referring to FIG. 1 and FIG. 2, an embodiment provides an electrochemical apparatus 100 including a housing 10, an electrode assembly 20, a first conductive plate 30, and a second conductive plate 40. The electrode assembly 20 is located inside the housing 10 and is of a wound structure. The first conductive plate 30 and the second conductive plate 40 are both electrically connected to the electrode assembly 20 and extend out of the housing 10 from the inside of the housing 10. As shown in FIG. 2, there is one electrode assembly 20. In other embodiments, there may be a plurality of electrode assemblies 20. The plurality of electrode assemblies 20 are located inside the housing 10 and are electrically connected in parallel or in series. Referring to FIG. 3A, the electrode assembly 20 includes a first electrode plate 21, a second electrode plate 22, and a separator 23, where the separator 23 is disposed between the first electrode plate 21 and the second electrode plate 22. The first electrode plate 21, the separator 23, and the second electrode plate 22 are sequentially stacked and wound to form the electrode assembly 20. As shown in FIG. 3A, the electrode assembly 20 has a winding center axis C perpendicular to a paper plane. A winding direction D is a direction of a counterclockwise rotation around the winding center axis C as shown in FIG. 3A. In some embodiments, the winding direction D may also be a direction of a counterclockwise rotation.

A first three-dimensional coordinate system is established based on the first direction D₁, the second direction D₂, and the third direction D₃ perpendicular to each other. The first direction D₁ is a direction perpendicular to the third region 31 of the first conductive plate 30. The second direction D₂ is an extension direction of the third region 31 of the first conductive plate 30. When the electrode plate is unfolded, a second three-dimensional coordinate system is established based on the first direction D₁, the second direction D₂, and a fourth direction D₄ perpendicular to each other. The fourth direction D₄ is a direction from a winding start end to a winding stop end of the electrode plate before winding. For example, the fourth direction D₄ is a direction from a first winding start end 21a to a first winding stop end 21b of the first electrode plate 21, and also a direction from a second winding start end 22a to a second winding stop end 22b of the second electrode plate 22.

In some embodiments, in the winding direction D, the electrode assembly 20 includes a first section 201, a first bent section 202, a second section 203, and a second bent section 204 that are connected in sequence. The first direction D₁ is a direction in which the first electrode plate 21 in the first section 201 or second section 203 is stacked. The electrode assembly 20 may include a plurality of first sections 201, a plurality of first bent sections 202, a plurality of second sections 203, and a plurality of second bent sections 204. In some embodiments, the first section 201 and the second section 203 may be flat and straight sections. In some other embodiments, in the winding direction D, the electrode assembly 20 may alternatively include four bent sections that are connected in sequence.

The first section 201 has a first outer surface 201a, and the second section 203 has a second outer surface 203a. A joint between the outermost first section 201 of the electrode assembly 20 and the outermost first bent section 202 of the electrode assembly 20 is a first end 205. The first end 205 is a start portion of a rightmost bent side of the first bent section 202 in FIG. 3A in the winding direction D, and the first end 205 is also a portion where a dotted line B-B formed by extension, of an innermost bent side at the right in the electrode assembly 20, in the first direction D₁ is intersected with the first outer surface 201a. A joint between the outermost first bent section 202 of the electrode assembly 20 and the outermost second section 203 of the electrode assembly 20 is a second end 206. The second end 206 is a stop portion of the rightmost bent side of the first bent section 202 in FIG. 3A in the winding direction D, and the second end 206 is also a portion where the dotted line B-B formed by extension, of the innermost bent side at the right in the electrode assembly 20, in the first direction D₁ is intersected with the second outer surface 203a. A joint between the outermost second section 203 of the electrode assembly 20 and the outermost second bent section 204 of the electrode assembly 20 is a third end 207. The third end 207 is a start portion of a leftmost curve of the second bent section 204 in FIG. 3A in the winding direction D, and the third end 207 is also a portion where a dotted line A-A formed by extension, of the innermost bent side at the left in the electrode assembly 20, in the first direction D₁ is intersected with the second outer surface 203a. A joint between the outermost second bent section 204 of the electrode assembly 20 and the outermost first section 201 of the electrode assembly 20 is a fourth end 208. The fourth end 208 is a stop portion of the leftmost curve of the second bent section 204 in FIG. 3A in the winding direction D, and the fourth end 208 is also a portion where the dotted line A-A formed by extension, of the innermost bent side at the left in the electrode assembly 20, in the first direction D₁ is intersected with the first outer surface 201a. In the first direction D₁, the first end 205 and the second end 206 are aligned, and the third end 207 and the fourth end 208 are aligned.

Referring to FIG. 3A, FIG. 4, and FIG. 5, the first electrode plate 21 includes a first conductive layer 210, a first conductive material layer 211, and a second conductive material layer 212. The first conductive layer 210 includes a first surface 210a and a second surface 210b opposite to the each other in the first direction D₁. The first conductive material layer 211 is disposed on the first surface 210a, and the second conductive material layer 212 is disposed on the second surface 210b. The second electrode plate 22 includes a second conductive layer 220, a third conductive material layer 221, and a fourth conductive material layer 222. The second conductive layer 220 includes a third surface 220a and a fourth surface 220b opposite to each other in the first direction D₁. The third conductive material layer 221 is disposed on the third surface 220a, and the fourth conductive material layer 222 is disposed on the fourth surface 220b. The second conductive material layer 212 and the third conductive material layer 221 face each other with a separator 23 located therebetween in the first direction D₁. In some embodiments, as shown in FIG. 3A, after stacking and winding, the first surface 210a of the first conductive layer 210 is far away from the winding center axis C, and the second surface 210b is toward the winding center axis C. The third surface 220a of the second conductive layer 220 is far away from the winding center axis C, and the fourth surface 220b is toward the winding center axis C. It should be understood that in other embodiments, the first surface 210a of the first conductive layer 210 may be toward the winding center axis C, and the second surface 210b is far away from the winding center axis C. In this case, the third surface 220a of the second conductive layer 220 is toward the winding center axis C, and the fourth surface 220b is far away from the winding center axis C.

The first electrode plate 21 may be a positive electrode plate or a negative electrode plate. Correspondingly, the first conductive layer 210 may be a positive electrode conductive layer or a negative electrode conductive layer, and the first conductive material layer 211 and the second conductive material layer 212 may each be a positive electrode active material layer or a negative electrode active material layer. The first conductive layer 210 may have a current collection function. The second electrode plate 22 may be a positive electrode plate or a negative electrode plate. Correspondingly, the second conductive layer 220 may be a negative electrode conductive layer or a positive electrode conductive layer, and the third conductive material layer 221 and the fourth conductive material layer 222 may each be a negative electrode active material layer or a positive electrode active material layer. The second conductive layer 220 may have a current collection function. In some embodiments, the first electrode plate 21 is a positive electrode plate, and the second electrode plate 22 is a negative electrode plate. The positive electrode conductive layer may be an aluminum foil or a nickel foil, and the negative electrode conductive layer may be at least one of a copper foil, a nickel foil, or a carbon-based conductive layer.

The positive electrode active material layer includes a positive electrode active material, and the positive electrode active material includes a compound that reversibly intercalates and deintercalates lithium ions (that is, a lithiated intercalation compound). In some embodiments, the positive electrode active material may include a lithium transition metal composite oxide. The lithium transition metal composite oxide contains lithium and at least one element selected from cobalt, manganese, and nickel. In some embodiments, the positive electrode active material is selected from at least one of lithium cobalt oxide (LiCoO₂), a lithium nickel manganese cobalt ternary material (NCM), lithium manganese oxide (LiMn₂O₄), lithium nickel manganese oxide (LiNi_{0.5}Mn_{1.5}O₄), or lithium iron phosphate (LiFePO₄).

The negative electrode active material layer contains a negative electrode active material. A negative electrode active material that is known in the art and that may reversibly intercalate and deintercalate active ions may be used. This is not limited in this invention. For example, the negative electrode active material may be but is not limited to one or a combination of more of graphite, soft carbon, hard carbon, carbon fiber, meso-carbon microbeads, a silicon-based material, a tin-based material, lithium titanate, another metal that may form an alloy with lithium, or the like. The graphite may be selected from one or a combination of more of artificial graphite, natural graphite, or modified graphite. The silicon-based material may be selected from one or a combination of more of elemental silicon, a silicon-oxygen compound, a silicon-carbon composite, or a silicon alloy. The tin-based material may be selected from one or a combination of more of elemental tin, a tin-oxygen compound, a tin alloy, or the like.

The separator 23 includes at least one of polyethylene, polypropylene, polyvinylidene fluoride, polyethylene terephthalate, polyimide, or aramid. For example, polyethylene is selected from at least one of high-density polyethylene, low-density polyethylene, or ultrahigh-molecular-weight polyethylene. Polyethylene and polypropylene have a good effect on alleviating short circuits and may improve the stability of a battery through a shutdown effect.

Referring to FIG. 4 and FIG. 6 to FIG. 8A, the first surface 210a of the first conductive layer 210 includes a first region 2100. The first conductive material layer 211 includes a first recess 2110. The first recess 2110 may be formed by opening a first end edge 211a of the first conductive material layer 211 inward in a direction of the winding center axis C, and the first recess 2110 does not run through a second end edge 211b of the first conductive material layer 211 in the direction of the winding center axis C. The first region 2100 is exposed from the first recess 2110, and the first region 2100 is separated from the first conductive material layer 211. Specifically, the first recess 2110 may be formed by laser cleaning in the first conductive material layer 211 so that the first region 2100 is exposed. Alternatively, the first region 2100 may be bonded with polystyrene foam, coated with an active material, and then heated to make the polystyrene foam fall off, so that the first region 2100 is exposed. Alternatively, the active material on the first region 2100 may be directly scraped using a scraper, so that the first region 2100 is exposed. However, it can be understood that after laser cleaning or scraping using a scraper, there is still a small amount of active material on the surface of the first region 2100. This is not limited in this invention. Viewed in the first direction D₁, the first conductive plate 30 is connected to the first region 2100 and extends out of the first region 2100 and beyond the first end edge 211a from the first region 2100, allowing for a connection to an external component (not shown in the figure). In order to meet the requirements of large-current charging, the first region 2100 may be disposed in an area other than a winding head and a winding tail of the first electrode plate 21. In some embodiments, the projections of the first region 2100 and the first recess 2110 in the first direction D₁ may both be rectangular. In some specific embodiments, the projections of the first region 2100 and the first recess 2110 in the first direction D₁ are both rectangular.

In some embodiments, the housing 10 may be a package bag obtained using a package film (for example, an aluminum-plastic film) for packaging, which means that the electrochemical apparatus 100 may be a soft pack battery. Referring to FIG. 1 and FIG. 2, the housing 10 includes a body 11 for accommodating the electrode assembly 20 and an sealing edge 12 connected to the body 11. The body 11 includes a first wall 111 and a second wall 112 opposite to each other in the second direction D₂. The sealing edge 12 is connected to the first wall 111 and further includes a third wall 113 and a fourth wall 114 opposite to each other in the second direction D₂. In the second direction D₂, the third wall 113 is disposed between the first wall 111 and the second wall 112, and the fourth wall 114 is also disposed between the first wall 111 and the second wall 112. The first conductive plate 30 and the second conductive plate 40 respectively extend out of the sealing edge 12 from the inside of the housing 10 to the outside of the housing 10. The housing 10 includes a first housing 13 and a second housing 14 opposite to each other. The housing 10 may be formed by heat-sealing the first housing 13 and the second housing 14. The first housing 13 is provided with a first space 130, and the second housing 14 is a flat plate structure. Thus, after the first housing 13 and the second housing 14 are heat-sealed, the first space 130 is enclosed by the second housing 14 to form an accommodating space for accommodating the electrode assembly 20. Certainly, the first housing 14 may also have a second space (not shown in the figure). After the first housing 13 and the second housing 14 are heat-sealed, the first space 130 and the second space cooperate with each other to form an accommodating space for accommodating the electrode assembly 20.

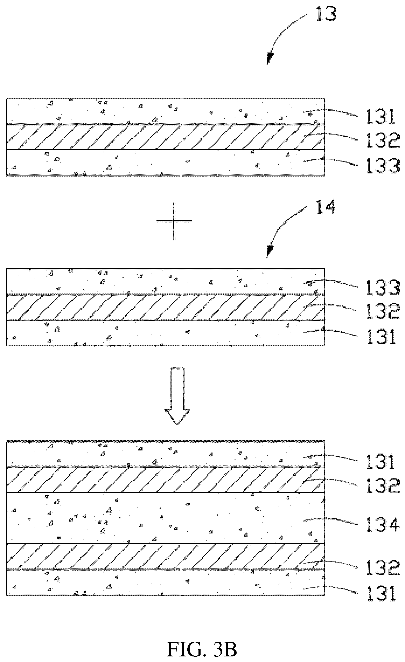

Referring to FIG. 3B, the first housing 13 and the second housing 14 may be obtained by folding a package film. That is, the first housing 13 and the second housing 14 are both multi-layer sheets. The multi-layer sheet includes a protective layer 131, a metal layer 132, and a package layer 133 stacked in sequence. The protective layer 131 may be made of a polymer material, which may be used to protect the metal layer 132, reduce the risk of damage to the metal layer 132 due to external forces, and also slow down permeation of air from an external environment, thereby maintaining a normal operating environment inside the electrochemical apparatus 100. The polymer material of the protective layer 131 may be selected from at least one of polyethylene terephthalate, polybutylene terephthalate, polyvinylidene fluoride, polytetrafluoroethylene, polypropylene, polyamide, or polyimide. The metal layer 132 may be used to delay penetration of moisture from the external environment and reduce damage to the electrode assembly 20 caused by external forces. In some embodiments, the metal layer 132 may be an aluminum foil layer or a steel foil layer. The package layer 133 may be used for packaging and may reduce the risk of dissolution or swelling of the multi-layer sheet by an organic solvent in an electrolyte. The package layer 133 may also be used for reducing the risk of corrosion of the metal layer caused by contact between an electrolytic salt in the electrolyte and the metal layer 132. The package layer 133 includes a polymer material with a property of being melted when heated. The polymer material may be selected from at least one of polypropylene, a propylene copolymer, polyethylene, or polymethyl methacrylate. During preparation of the housing 10, a certain temperature and pressure may be applied to edges of the first housing 13 and the second housing 14 using a package head, such that the package layer 133 of the first housing 13 and the package layer 133 of the second housing 14 are melted and bonded together to obtain a polymer layer 134. Therefore, after the sealing edge 12 is formed through heat sealing, the sealing edge 12 may include a protective layer 131, a metal layer 132, a polymer layer 134, a metal layer 132, and a protective layer 131 stacked in sequence.

In some other embodiments, the electrochemical apparatus 100 is not limited to a soft pack battery and may alternatively be a steel-shell battery, an aluminum-shell battery, or the like, which is not limited in this invention.

An electrochemical apparatus 200 includes an electrode assembly 20 and a first conductive plate 30; the electrode assembly 20 includes a first electrode plate 21; the first electrode plate 21 includes a first conductive layer 210 and a first conductive material layer 212; where
the first conductive layer 210 includes a first surface 210a and a second surface 210b toward an opposite direction with respect to the first surface 210a; and viewed along a first direction D₁ perpendicular to the first surface 210a, the first conductive layer 210 further includes a first end edge 211b in a second direction D₂ perpendicular to the first direction D₁, and a second end edge 211a that is located on a side opposite to the first end edge 211b in the second direction D₂ and that has a third recess R viewed along the second direction D₂;
the first conductive material layer 211 is disposed on the first surface 210a of the first conductive layer 210, separated from at least a part of a fourth recess 4, and arranged from the second end edge 211a to the first end edge 211b; and
the first conductive plate 30 is disposed on the first surface 210a of the first conductive layer 210, is separated from the first conductive material layer 211, and overlaps with a third recess R viewed along the first direction D₁.

In the electrochemical apparatus described above, viewed along the first direction D₁, the first conductive material layer 211 includes a portion connected to the second end edge 211a and the third recess R.

In the electrochemical apparatus described above, viewed along the first direction D₁, in a third direction D₃ perpendicular to a second direction D₂, the first conductive material layer 211 includes a first lateral side R₁ connected to the second end edge 211a and opposite the first conductive plate 30.

In the electrochemical apparatus described above, viewed along the first direction D₁, in the third direction D₃, the first conductive material layer 211 includes a fifth side 2101 separated from the first lateral side R₁ and opposite the first conductive plate 30.

In the electrochemical apparatus described above, the first conductive material layer 211 includes a ninth side 2114 connected to the first lateral side R₁ and the fifth side 2101.

In the electrochemical apparatus described above, a distance W₃ from the first conductive plate 30 to the first lateral side R₁ in the third direction D₃ is shorter than a distance W₁ from the first lateral side R₁ to the fifth side 2101 in the third direction D₃.

In the electrochemical apparatus described above, viewed along the first direction D₁, the first conductive material layer 211 includes a portion connected to the second end edge 211a and the third recess R; and viewed along the first direction D₁, in the third direction D₃ perpendicular to the second direction D₂, the first conductive material layer 211 further includes a second lateral side R₂ connected to the second end edge 211a and opposite the first conductive plate 30, and a sixth side 2102 separated from the second lateral side R₂ and opposite the first conductive plate 30.

In the electrochemical apparatus described above, the first conductive material layer 211 includes a tenth side 2115 connected to the second lateral side R₂ and the sixth side 2102.

In the electrochemical apparatus described above, a distance W₄ from the first conductive plate 30 to the second lateral side R₂ is shorter than a distance W₂ from the second lateral side R₂ to the tenth side 2115 in the third direction D₃.

In the electrochemical apparatus described above, in the third direction D₃, the distance W₃ from the first conductive plate 30 to the first lateral side R₁ is shorter than a distance W₄ from the first conductive plate 30 to the second lateral side R₂.

In the electrochemical apparatus described above, a distance L₂ from the second end edge 211a to the ninth side 2114 in the second direction D₂ is shorter than a distance L₄ from the ninth side 2114 to a bottom edge R₃ of the third recess R in the second direction D₂.

In the electrochemical apparatus described above, the third recess R includes a slope edge R₁₁ extending from the second end edge 211a to the bottom edge R₃ of the third recess.

In the electrochemical apparatus described above, the electrode assembly 20 includes a first layer 50 that at least covers a part of the first conductive plate 30 and the first lateral side R₁ and that includes an insulating material.

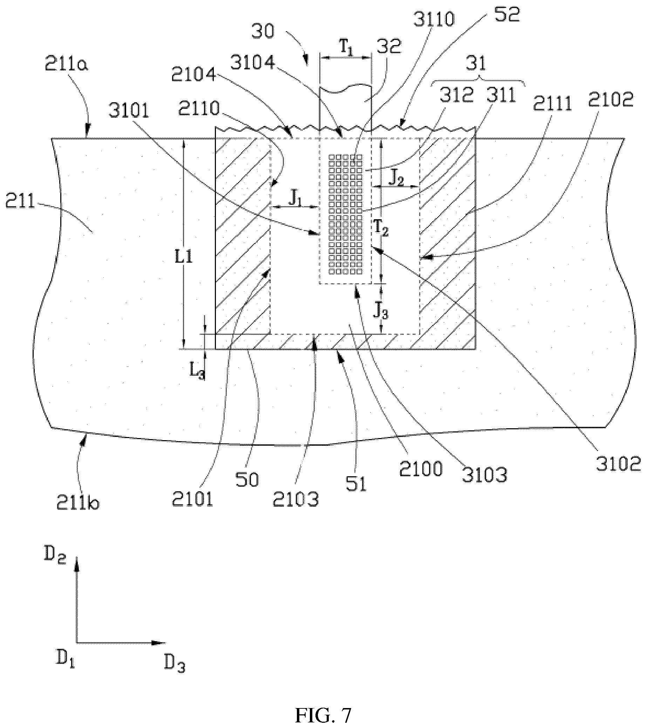

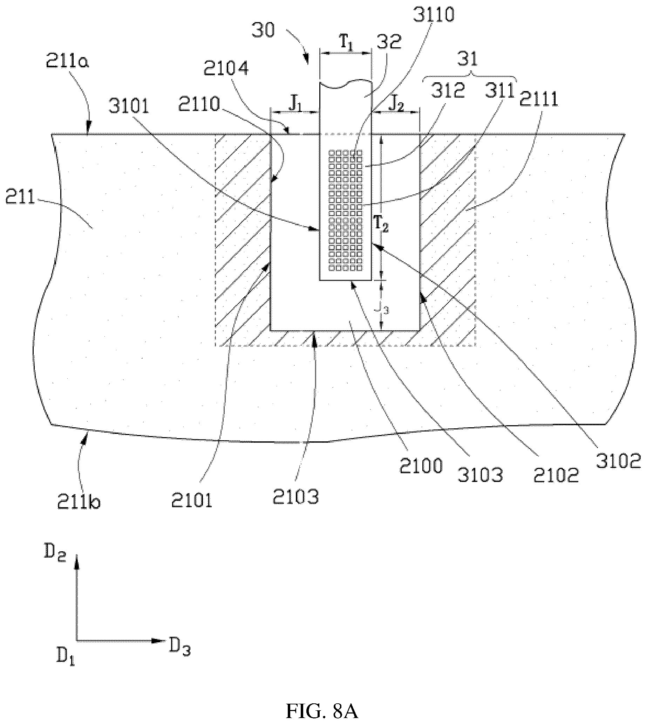

As shown in FIG. 7 and FIG. 8A, the first conductive plate 30 includes a third region 31 and a fourth region 32 connected to the third region 31. In the first direction D₁, a projection of the third region 31 is located in a projection of the first region 2100, that is, the projection of the third region 31 overlaps with at least a part of the projection of the first region 2100, while a projection of the fourth region 32 is located outside the projection of the first region 2100. With reference to FIG. 1, the fourth region 32 extends out of the housing 10. With reference to FIG. 1 and FIG. 3B, when the electrochemical apparatus 100 is a soft pack battery, the fourth region 32 extends out of the housing 10 from the polymer layer 134 in the sealing edge 12. In some embodiments, a surface where the sealing edge 12 is located is perpendicular to a surface where the first wall 111 is located. In this case, the second direction D₂ not only is an extension direction of the third region 31 but also may be an extension direction of a first conductive plate 30. However, in other embodiments, the sealing edge 12 may also be folded to the first wall 111 to reduce a size of the electrochemical apparatus 100 in the second direction D₂, thereby increasing utilization rate and energy density. In this case, the second direction D₂ is an extension direction of the third region 31, while an extension direction of the fourth region 32 in the sealing edge 12 is perpendicular of the second direction D₂.

The third region 31 includes a connection region 311 and an edge region 312 provided around the connection region 311. The first conductive plate 30 is connected to the first region 2100 through the connection region 311, that is, the connection region 311 is a position through which current flows during charging of the electrochemical apparatus 100. In some embodiments, the first conductive plate 30 is welded to the first region 2100 through the connection region 311, thereby providing a high connection strength between the first conductive plate 30 and the first region 2100. A plurality of welding spots 3110 may be formed after the connection region 311 and the first region 2100 are welded, and the connection region 311 and the first region 2100 are fixed through the welding spots 3110. When there are a large number of welding spots 3110, contact resistance between the first conductive plate 30 and the first electrode plate 21 may be reduced, thereby reducing heat production during charging of the electrochemical apparatus 100. In other embodiments, the first conductive plate 30 may alternatively be connected to the first region 2100 through a conductive adhesive or in other manners.

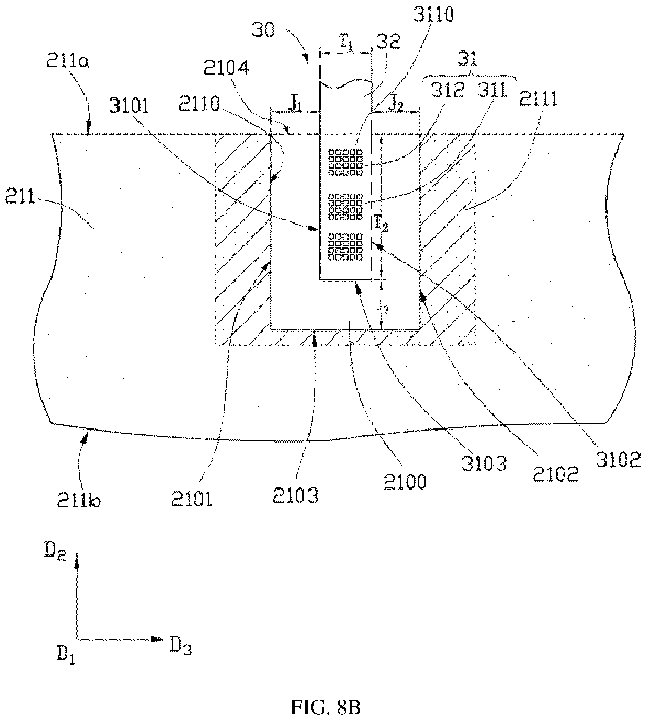

In some embodiments, as shown in FIG. 7 and FIG. 8A, viewed from the first direction D₁, the plurality of welding spots 3110 may be arranged in a single matrix. In this case, the edge region 312 is a region outside an outermost circle of welding spots 3110 in the third region 31. In some other embodiments, as shown in FIG. 8B, the plurality of welding spots 3110 may alternatively be arranged in a plurality of matrices, such that the connection region 311 includes a plurality of separated regions. In this case, the edge region 312 further includes a region located between adjacent two of the matrices in the third region 31.

As shown in FIG. 7 and FIG. 8A, viewed from the first direction D₁, the third region 31 is approximately rectangular. The third region 31 includes a first side 3101, a second side 3102, a third side 3103, and a fourth side 3104. The first side 3101 and second side 3102 face each other in the third direction D₃. The third side 3103 and fourth side 3104 face each other in the second direction D₂. The third side 3103 connects two connecting end portions of the first side 3101 and the second side 3102, and the fourth side 3104 connects the two connecting end portions of the first side 3101 and the second side 3102. In addition, the fourth side 3104 is boundary of the third region 31 and the fourth region 32. In some embodiments, the first side 3101 and the second side 3102 extend along the second direction D₂, respectively; and the third side 3103 and the fourth side 3104 extend along the third direction D₃.

The first region 2100 includes a fifth side 2101, a sixth side 2102, and a seventh side 2103. The fifth side 2101 and sixth side 2102 face each other in the third direction D₃. The seventh side 2103 connects two connecting end portions of the fifth side 2101 and the sixth side 2102. Viewed in the first direction D₁, the seventh side 2103 faces a third end edge 2104 of the first region 2100 in the second direction D₂. It can be understood that the first recess 2110 is a three-dimensional structure. However, viewed from the first direction D₁, the first recess 2110 includes a plurality of sequentially connected sides (not shown in the figure). In addition, viewed from the first direction D₁, the fifth side 2101, the sixth side 2102, and the seventh side 2103 of the first region 2100 overlap with the sides of the first recess 2110, respectively. In some embodiments, the fifth side 2101 and the sixth side 2102 extend along the second direction D₂, respectively; and the seventh side 2103 extends along the third direction D₃. In the second direction D₂, the seventh side 2103 and the third side 3103 are arranged in sequence, and the seventh side 2103 and the third side 3103 at least partially face each other. In some embodiments, the seventh side 2103 and the third side 3103 may be parallel to each other. In the third direction D₃, the fifth side 2101, the first side 3101, the second side 3102, and the sixth side 2102 are arranged in sequence; the fifth side 2101 and the first side 3101 at least partially face each other; and the second side 3102 and the sixth side 2102 at least partially face each other. In some embodiments, the fifth side 2101, the first side 3101, the second side 3102, and the sixth side 2102 may be parallel to each other.

In the second direction D₂, the seventh side 2103 and the third side 3103 are arranged in sequence, meaning that a virtual straight line provided along the second direction D₂ runs through the seventh side 2103 and the third side 3103 in sequence. In the third direction D₃, the fifth side 2101, the first side 3101, the second side 3102, and the sixth side 2102 are arranged in sequence, meaning that a virtual straight line provided along the third direction D₃ runs through the fifth side 2101, the first side 3101, the second side 3102, and the sixth side 2102. In some embodiments, the second direction D₂ is the direction of the winding center axis C, and the third direction D₃ is perpendicular to the second direction D₂.

In some embodiments, as shown in FIG. 7 and FIG. 8A, the fifth side 2101, the sixth side 2102, and the seventh side 2103 are all in a straight line shape. In some other embodiments, when the first region 2100 is formed by laser cleaning or the like, at least one of the fifth side 2101, the sixth side 2102, or the seventh side 2103 may be in a concave-convex shape. This is not limited in this invention.

As shown in FIG. 7 and FIG. 8A, in the third direction D₃, the first conductive plate 30 is disposed at an approximately central position of the first region 2100.

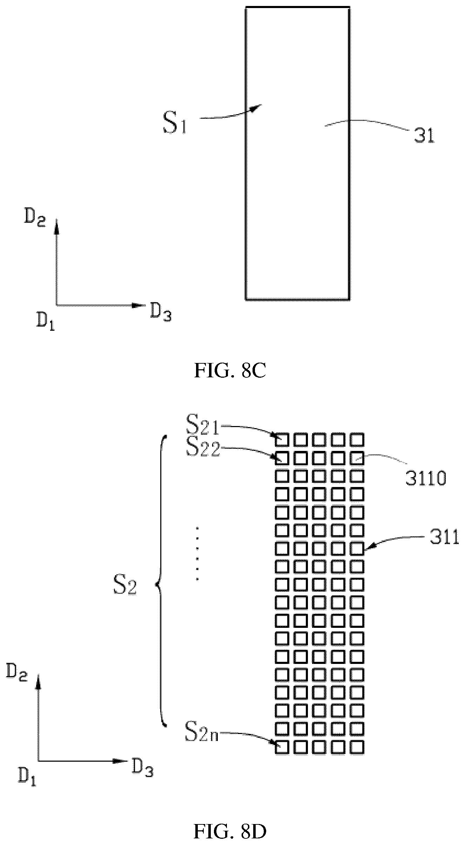

A size of the third region 31 in the third direction D₃ is T₁, a size of the third region 31 in the second direction D₂ is T₂, an area of the projection of the third region 31 in the first direction D₁ is S₁ (shown in FIG. 8C), an area of the projection of the connection region 311 in the first direction D₁ is S₂ (shown in FIG. 8D), a distance between the first side 3101 and the fifth side 2101 is J₁, a distance between the second side 3102 and the sixth side 2102 is J₂, and a distance between the third side 3103 and the seventh side 2103 is J₃, where a heat dissipation coefficient K of the first region 2100 satisfies K = S₂/S₁ + (J₁ + J₂ + J₃)/(T₁ + T₂) ≥ 30%.

S₂/S₁ may reflect an area proportion of the connection region 311 in the third region 31, that is, a proportion of a current pass area of the first conductive plate 30. When S₂/S₁ is large, the current pass area of the first conductive plate 30 increases, and current is distributed more dispersedly and uniformly on the first conductive plate 30 during charging of the electrochemical apparatus 100, allowing for more dispersive heat production at the first conductive plate 30 during large-current charging, thereby reducing the risk of local overheating of the first conductive plate 30. Moreover, J₁ may reflect a length of a portion of the first region 2100 exposed from a side of the first side 3101 of the first conductive plate 30; J₂ may reflect a length of a portion of the first region 2100 exposed from a side of the second side 3102 of the first conductive plate 30; and J₃ may reflect a length of a portion of the first region 2100 exposed from a side of the third side 3103 of the first conductive plate 30. Therefore, (J₁ + J₂ + J₃)/(T₁ + T₂) may reflect a proportion of an area of the first region 2100 exposed from the first conductive plate 30, that is, a proportion of a heat dissipation area in the first region 2100. When (J₁ + J₂ + J₃)/(T₁ + T₂) is large, the heat dissipation area of the first conductive plate 30 increases, reducing a temperature rise during large-current charging. Therefore, in this invention, the heat dissipation coefficient K of the first region 2100 is a sum of S₂/S₁ and (J₁ + J₂ + J₃)/(T₁ + T₂), and the heat dissipation coefficient K is set to be ≥ 30%, improving the safety and reliability of the electrochemical apparatus 100.

J₁, J₂, J₃, T₁, and T₂ may be directly measured using a direct measurement method, respectively. Measurement steps include: disassembling the electrochemical apparatus 100, and taking the first electrode plate 21 as a test sample; and directly measuring values of J₁, J₂, J₃, T₁, and T₂ using a caliper or another appropriate measuring instrument, or acquiring an image of the first electrode plate 21, and performing measurement in the image.

S₁ may be calculated according to T₁ and T₂ in combination with a specific shape of the third region 31. It can be understood that when the third region 31 is rectangular, S₁ is a product of T₁ and T₂.

In some embodiments, when the connection region 311 is welded to the first region 2100, S₂ is a sum of projection areas of the plurality of welding spots 3110 in the first direction D₁. As shown in FIG. 8D, if the number of the welding spots 3110 is n (n is a natural number greater than 1), projection areas of the n welding spots 3110 in the first direction D₁ are respectively S₂₁, S₂₂, ..., and S₂ₙ, and S₂ = S₂₁ + S₂₂ + ... + S₂ₙ. S₂ may be measured using an image method. Measurement steps include: disassembling the electrochemical apparatus 100, taking the first electrode plate 21 as a test sample, and acquiring an image including the connection region 311 in the first direction D₁, as a first image; acquiring an image of a reference target with a known area of S₀, as a second image; calculating the number n₁ of pixel points corresponding to the welding spots 3110 in the first image, and calculating the number n₀ of pixel points corresponding to the reference target in the second image; and calculating an area S₂ of the welding spots 3110 according to the area A₀, the number n₁, and the number n₀, where S₂ = (S₀ × n₀)/n₁. It can be understood that measurement of S₂ is not limited to the above method. In other embodiments, when the connection region 311 is connected to the first region 2100 in another manner, S₁ may alternatively be obtained through calculation according to a size of each dimension of the connection region 311 and a specific shape of the connection region 311.

Referring to FIG. 4, in some embodiments, the second surface 210b of the first conductive layer 210 is defined to include a second region 2105. The second conductive material layer 212 includes a second recess 2120. The second region 2105 is exposed from the second recess 2120, and the second region 2105 is separated from the second conductive material layer 212. However, it can be understood that a small amount of active material may be left on the surface of the second region 2105. This is not limited in this invention. In the first direction D₁, the projection of the first region 2100 and a projection of the second region 2105 at least partially overlap. Thus, heat produced at the first conductive plate 30 may not only be dissipated through the first region 2100 exposed from the first conductive plate 30 but also be transferred to the second region 2105 through overlapping portions of the first region 2100 and second region 2105 and dissipated through the second region 2105, thereby further improving the heat dissipation efficiency. In some specific embodiments, in order to further improve the heat dissipation efficiency, in the first direction D₁, the projection of the first region 2100 and the projection of the second region 2105 may be set to totally overlap.

It can be understood that when the first conductive plate 30 is welded to the first region 2100 through the connection region 311, a burr or welding mark may be formed at the connection region 311, and the burr or welding mark may puncture the separator 23, causing a short circuit. As shown in FIG. 4, FIG. 6, and FIG. 7, In some embodiments, the electrochemical apparatus 100 further includes a first layer 50 at least adhered to the third region 31, where the first layer 50 contains an insulating material. In the first direction D₁, the projection of the first region 2100 is located in a projection of the first layer 50. That is, the first layer 50 at least totally covers the third region 31. Further, the first layer 50 may at least totally cover the first region 2100. The first layer 50 may reduce the risk of a short circuit caused when the burr or welding mark of the connection region 311 punctures the separator 23. In addition, the first layer 50 is also configured to compensate for a reduced thickness of a position where the first recess 2110 is provided on the first conductive material layer 211, allowing the electrochemical apparatus 100 to have a more uniform overall thickness. The first layer 50 may be a single-sided adhesive tape or a double-sided adhesive tape and is specifically made of a material selected from at least one of polypropylene, polyethylene, polyvinylidene fluoride, a vinylidene fluoride-hexafluoropropylene copolymer, polymethyl methacrylate, or polyethylene glycol. In other embodiments, the first layer 50 may also be a ceramic coating.

In some embodiments, the first layer 50 may extend beyond the first region 2100 as well as cover and be adhered to a part of the first conductive material layer 211. Specifically, the first conductive material layer 211 includes a first conductive material region 2111, where the first conductive material region 2111 encloses the first recess 2110. The first layer 50 is further adhered to the first conductive material region 2111. For ease of distinction, the first conductive material region 2111 and other regions of the first conductive material layer 211 are shown in different filling manners in FIG. 7 and FIG. 8A. However, it can be understood that this does not mean that the first conductive material region 2111 and other regions of the first conductive material layer 211 are made of different active materials, and there is no obvious boundary therebetween.

As shown in FIG. 7, viewed from the first direction D₁, the first layer 50 includes an eighth side 51. In the second direction D₂, the seventh side 2103 is disposed between the eighth side 51 and the third side 3103. A distance between the third end edge 2104 of the first region 2100 opposite the seventh side 2103 in the second direction D₂ and the eighth side 51 may be L₁, and a distance between the seventh side 2103 and the eighth side 51 may be L₃, where L₃/L₁ ≤ 30%. It can be understood that the first conductive material region 2111 is covered by the first layer 50, so that a material in the first conductive material region 2111 is unlikely to contribute to capacity during charging and discharging. L₃/L₁ is satisfied through a design. Thus, in the second direction D₂, a size of the first conductive material region 2111 covered by the first layer 50 is reduced, that is, an active material covered by the first layer 50 and unlikely to contribute to capacity is reduced, thereby reducing the impact of the first layer 50 on the capacity of the electrochemical apparatus 100.

In some embodiments, L₁ ranges from 10 mm to 50 mm. When L₁ is large, the first conductive material layer 211 covered by the first layer 50 in the second direction D₂ has a relatively large size, and therefore has a greater impact on the capacity of the electrochemical apparatus 100. When L₁ is small, the first region 2100 also has a small size in the second direction D₂, so that the distance J₃ between the third side 3103 and the seventh side 2103 is also small, and thus the heat dissipation coefficient K of the first region 2100 is reduced, and the heat dissipation capability is relatively reduced.

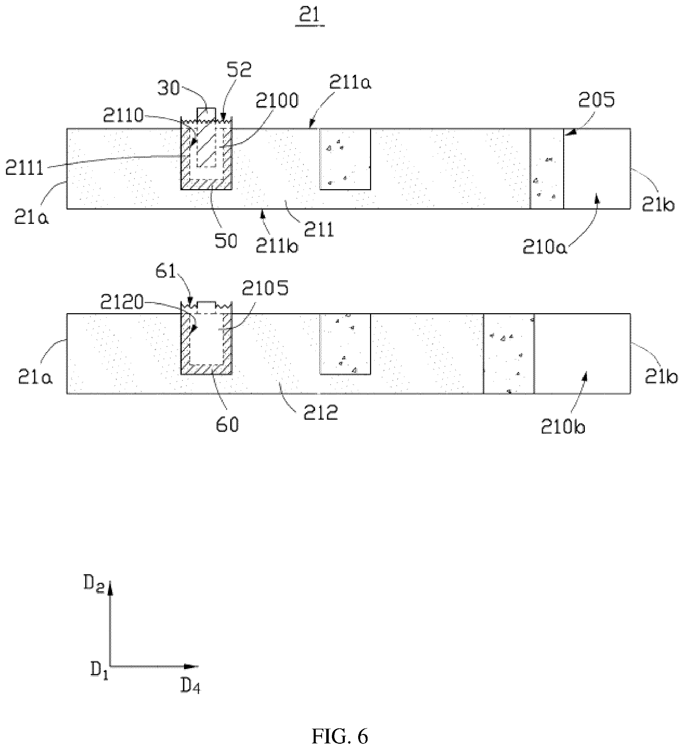

As shown in FIG. 6 and FIG. 7, in some embodiments, in the second direction D₂, an edge 52 of the first layer 50 may extend beyond an edge of the first electrode plate 21.

As shown in FIG. 4, in some embodiments, the second conductive material layer 212 includes a second conductive material region 2121, where the second conductive material region 2121 encloses the second recess 2120. The electrochemical apparatus 100 further includes a second layer 60, where the second layer 60 includes an insulating material. The second layer 60 covers the second region 2105 and is adhered to the second conductive material region 2121. To be specific, in the first direction D₁, the projection of the second region 2105 is located in a projection of the second layer 60. The second layer 60 may be configured to compensate for a reduced thickness of a position where the second recess 2120 is provided on the second conductive material layer 212. In some embodiments, the second layer 60 may be a single-sided adhesive tape, a double-sided adhesive tape, or a ceramic coating.

As shown in FIG. 6, in some embodiments, in the second direction D₂, an edge 61 of the second layer 60 may extend beyond the edge of the first electrode plate 21.

As shown in FIG. 4, in some embodiments, the electrochemical apparatus 100 may further include a third layer 70 and a fourth layer 80. The third layer 70 and the fourth layer 80 each include an insulating material. In the first direction D₁, the first layer 50 is disposed between the first conductive plate 30 and the third layer 70, and the second layer 60 is disposed between the first conductive plate 30 and the fourth layer 80. The third layer 70 and the fourth layer 80 may further compensate for the reduced thickness of the electrode plate at the first recess 2110 and the second recess 2120. In addition, after the burr or welding mark of the connection region 311 punctures the separator 23, the third layer 70 may cover the burr or welding mark, thereby further reducing the risk of a short circuit. When the first electrode plate 21 is a positive electrode plate and the second electrode plate 22 is a negative electrode plate, in the first direction D₁, a projection of the third layer 70 is located in the projection of the first layer 50 (that is, in the first direction D₁, an end portion of the third layer 70 does not extend beyond an end portion of the first layer 50), such that lithium ions deintercalated from a part of the first conductive material layer 211 around the first layer 50 in the first direction D₁ may be fully received by the third conductive material layer 221, reducing the risks of excessive accumulation of lithium ions and formation of lithium dendrites, thereby improving the safety. Similarly, in the first direction D₁, a projection of the fourth layer 80 is located in the projection of the second layer 60 (that is, in the first direction D₁, the end portion of the third layer 70 does not extend beyond the end portion of the first layer 50), such that lithium ions deintercalated from a part of the second conductive material layer 212 around the second layer 60 in the first direction D₁ may be fully received by the fourth conductive material layer 222, reducing the risks of excessive accumulation of lithium ions and formation of lithium dendrites, thereby improving the safety. In some embodiments, the third layer 70 and the fourth layer 80 may both be single-sided adhesive tapes, double-sided adhesive tapes, or ceramic coatings.

In some other embodiments, when the first electrode plate 21 is a negative electrode plate and the second electrode plate 22 is a positive electrode plate, the third layer 70 may also be configured to hinder movement, toward the second recess 2120, of lithium ions deintercalated from a part of the third conductive material layer 221 corresponding to the third layer 70 in the first direction D₁, thereby reducing the risks of excessive accumulation of lithium ions and formation of lithium dendrites due to the lack of lithium ions that may be embedded in the second recess 2120. Similarly, the fourth layer 80 may also be configured to hinder movement, toward the first recess 2110, of lithium ions deintercalated from a part of the fourth conductive material layer 222 corresponding to the fourth layer 80 in the first direction D₁, thereby reducing the risks of excessive accumulation of lithium ions and formation of lithium dendrites due to the lack of lithium ions that may be embedded in the first recess 2110.

As shown in FIG. 4, in some specific embodiments, the third layer 70 may be adhered to the third conductive material layer 221 of the second electrode plate 22, and the fourth layer 80 may be adhered to the fourth conductive material layer 222 of the second electrode plate 22, such that the third layer 70 and the fourth layer 80 are fixed in the electrochemical apparatus 100 and have a function of compensating for thickness or reducing the risk of formation of lithium dendrites. Certainly, in other embodiments, the third layer 70 and the fourth layer 80 may also be adhered to the separator 23.

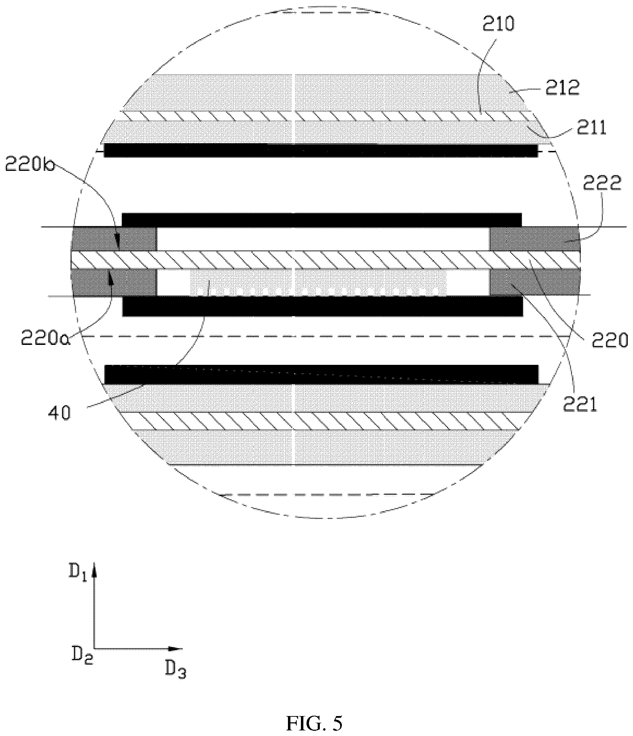

As shown in FIG. 5, in some embodiments, the second electrode plate 22 may adopt a design similar as that of the first electrode plate 21. To be specific, the second conductive plate 40 is connected to an empty region of the second electrode plate 22, and a heat dissipation coefficient of the empty region is defined to be greater than or equal to 30%, thereby further improving the safety and reliability of the electrochemical apparatus 100.

As shown in FIG. 3A to FIG. 5, in some embodiments, when the first section 201 and the second section 203 are both flat and straight sections, the first conductive plate 30 and the second conductive plate 40 may both be located at the first section 201, thereby improving flatness of the first conductive plate 30 when the first conductive plate 30 is connected to the first region 2100.

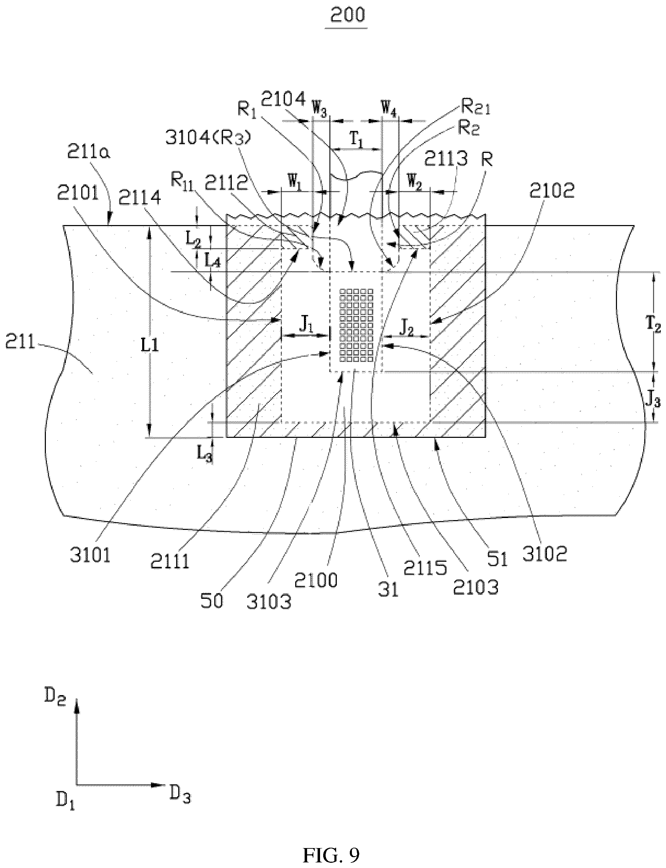

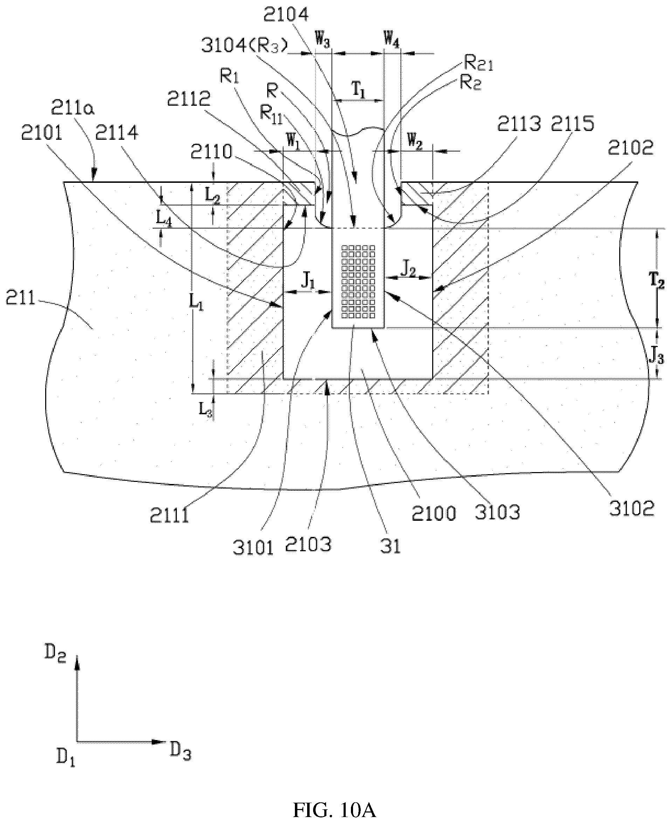

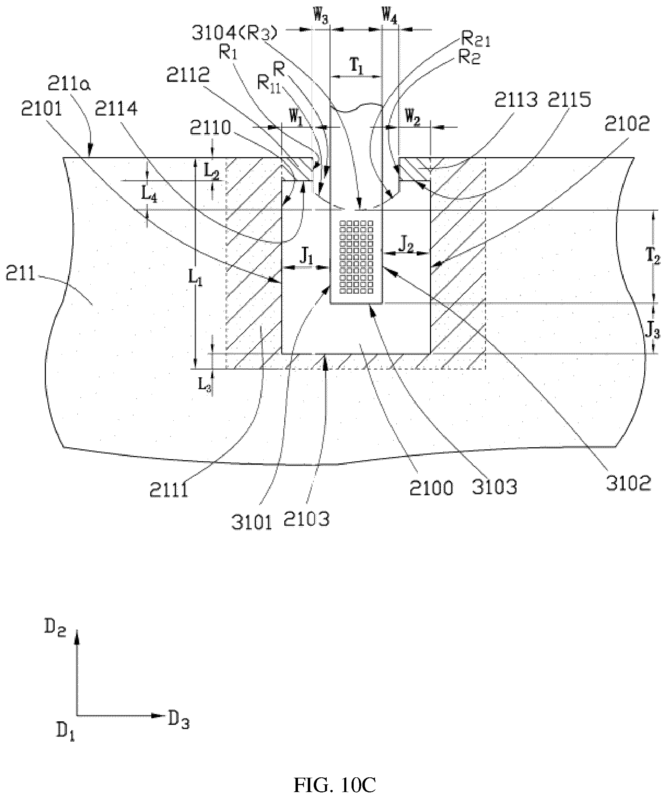

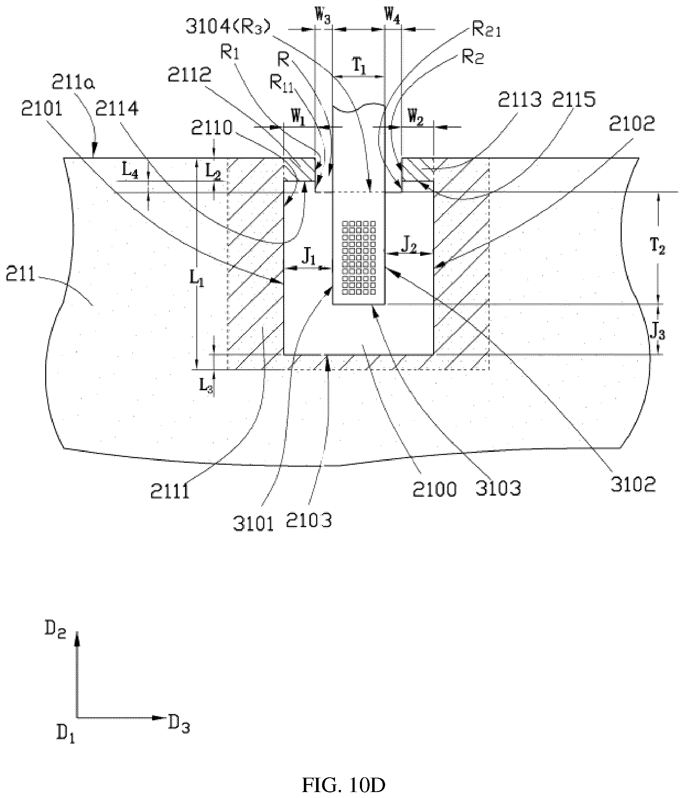

Referring to FIG. 9 and FIG. 10A, another embodiment further provides an electrochemical apparatus 200. The electrochemical apparatus 200 differs from the electrochemical apparatus 100 at least in that a third recess R is inward provided at a third end edge 2104 (that is, an edge of the first region 2100 opposite the seventh side 2103) of the first region 2100 in a second direction D₂. The third recess R includes a first lateral side R₁, a second lateral side R₂, and a bottom side R₃. In a third direction D₃, the first lateral side R₁ and the second lateral side R₂ face each other. Viewed in a first direction D₁, the first lateral side R₁ and the second lateral side R₂ are both connected to a first end edge 211a of a first conductive material layer 211. Two ends of the bottom side R₃ are connected to the first lateral side R₁ and the second lateral side R₂, respectively. Viewed in the first direction D₁, the first lateral side R₁ has a slope edge R₁₁ far away from the first end edge 211a of the first conductive material layer 211, and the slope edge R₁₁ is connected to the bottom side R₃. The second lateral side R₂ has a slope edge R₂₁ far away from the first end edge 211a of the first conductive material layer 211, and the slope edge R₂₁ is connected to the bottom side R₃. Viewed in the first direction D₁, the bottom side R₃ and a fourth side 3104 of a third region 31 at least partially overlap. In some embodiments, in the third direction D₃, the third recess may be disposed in an approximately central position of the first region 2100, and corners of the third recess R may be arc-shaped corners. To be specific, the bottom side R₃ is a straight line; the slope edge R₁₁ of the first lateral side R₁ close to the bottom side R₃ is an arc line, and the remaining parts are straight lines; and the slope edge R₂₁ of the second lateral side R₂ is an arc line, and the remaining parts are straight lines. In some other embodiments, viewed from the first direction D₁, the third recess R may have a different shape. For example, as shown in FIG. 10C, the bottom side R₃ is an arc line. The slope edge R₁₁ of the first lateral side R₁ is an arc line, and the remaining parts are straight lines. The slope edge R₂₁ of the second lateral side R₂ is an arc line, and the remaining parts are straight lines. As shown in FIG. 10D, the corners of the third recess R may be right-angled corners. In this case, the bottom side R₃, the first lateral side R₁, and the second lateral side R₂ are all straight lines.

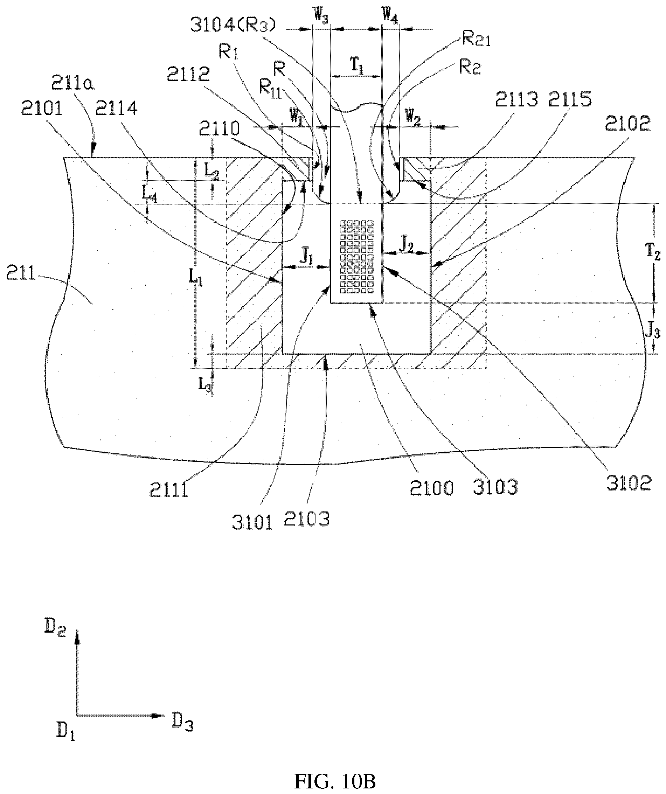

A first conductive material region 2111 includes a first extension region 2112 and a second extension region 2113 extending toward the third recess R in the third direction D₃. Viewed in the first direction D₁, the first extension region 2112 and the second extension region 2113 are disposed on two sides of the third recess R and are connected to the third recess R. Viewed in the first direction D₁, the first extension region 2112 is connected between the fifth side 2101 and the first lateral side R₁ of the third recess R, and the second extension region 2113 is connected between the sixth side 2102 and the second lateral side R₂ of the third recess R. In some other embodiments, as shown in FIG. 10B, viewed from the first direction D₁, the first extension region 2112 and the second extension region 2113 may alternatively be separated from the third recess R in the third direction D₃. The provision of the first extension region 2112 and the second extension region 2113 may compensate for a reduced thickness of a position where the first recess 2110 is provided on the first conductive material layer 211, allowing the electrochemical apparatus 100 to have a more uniform overall thickness. In addition, when the first layer 50 is provided, the presence of the first extension region 2112 and the second extension region 2113 may also increase a contact area between the first layer 50 and the first conductive material layer 211, reducing the risk of wrinkling of the first layer 50. Moreover, a preparation process of an electrode plate generally includes procedures such as positive/negative electrode slurry stirring, electrode plate coating, electrode plate rolling, and electrode plate slitting. The first third recess R is provided in the first region 2100, and the first conductive material region 2111 extends toward the third recess R to form the first extension region 2112 and the second extension region 2113. Therefore, when the electrode plate is slitted (the electrode plate is cut along the third direction D₃), a uniform thickness at an incision of the electrode plate helps to reduce the risk of formation of a wavy edge of the electrode plate at the incision. For ease of distinction, the first extension region 2112 and the second extension region 2113 are shown in different filling manners in FIG. 9 and FIG. 10A in comparison with other regions of the first conductive material layer 211. However, it can be understood that this does not mean that the first extension region 2112 and the second extension region 2113 are made of different active materials in comparison with other regions of the first conductive material layer 211, and there is no obvious boundary therebetween.

Further, a size of the first extension region 2112 in the third direction D₃ is W₁, and a size of the second extension region 2113 in the third direction D₃ is W₂, where (W₁ + W₂)/T₁ ≥ 20%. (W₁ + W₂)/T₁ may reflect a size proportion of the third recess R in the third direction D₃, and larger (W₁ + W₂)/T₁ indicates a smaller size proportion of the third recess R. Therefore, limiting the value of (W₁+ W₂)/T₁ may alleviate reduction of the heat dissipation area of the first region 2100 caused by provision of the third recess R. As shown in FIG. 9 and FIG. 10A, in some embodiments, in the third direction D₃, since the third recess R is disposed in an approximately central position of the first region 2100, W₁ is approximately equal to W₂. In some other embodiments, the third recess R may be inclined toward a side of the first region 2100.

In this embodiment, the first conductive material region 2111 further includes the first extension region 2112 and the second extension region 2113. Therefore, if the size of the first conductive material region 2111 covered by the first layer 50 needs to be limited, in some embodiments, in addition to defining the distance between the third end edge 2104 of the first region 2100 in the second direction D₂ and the eighth side 51 as L₁ and defining the distance between the seventh side 2103 and the eighth side 51 as L₃, sizes of the first extension region 2112 and the second extension region 2113 covered by the first layer 50 may be further limited. Therefore, the first extension region 2112 and the second extension region 2113 are further defined to have a same size of L₂ in the second direction D₂, and (L₂ + L₃)/L₁ is set to be ≤ 30%. (L₂ + L₃)/L₁ is limited, so that in the second direction D₂, a size of the first conductive material region 2111 covered by the first layer 50 is reduced, that is, an active material covered by the first layer 50 and unlikely to contribute to capacity is reduced, thereby reducing the impact of the first layer 50 on the capacity of the electrochemical apparatus 200.

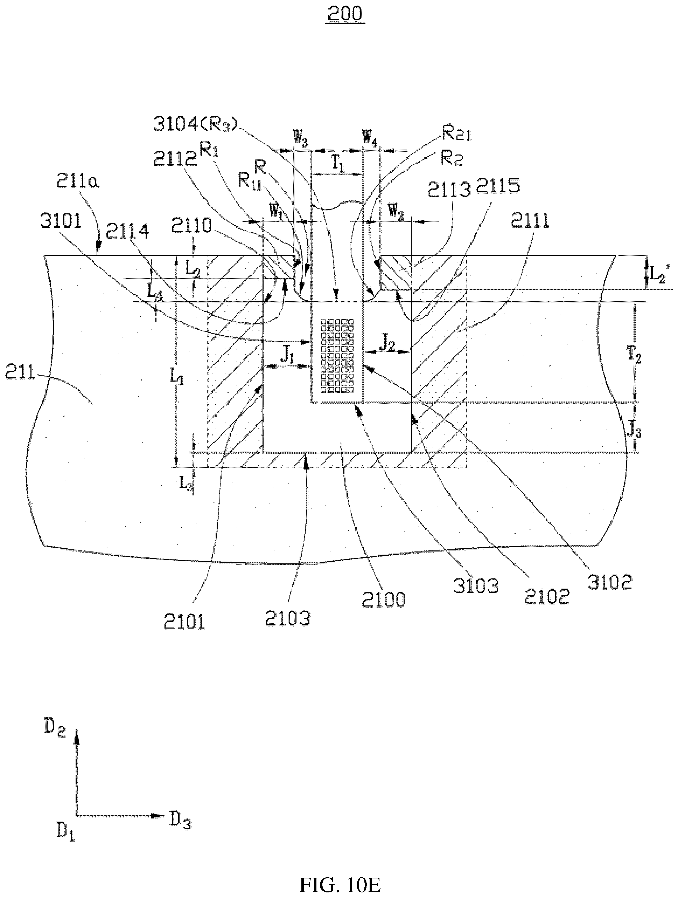

As shown in FIG. 10E, in another embodiment, the first extension region 2112 and the second extension region 2113 have different sizes in the second direction D₂. Specifically, the size of the first extension region 2112 in the second direction D₂ is L₂, and the size of the second extension region 2113 in the second direction D₂ is L₂'. In this case, (0.5L₂ + 0.5L₂' + L₃)/L₁ may be defined to be ≤ 30%. As shown in FIG. 9 and FIG. 10A, in some embodiments, in the third direction D₃, a distance between the first extension region 2112 and the first conductive plate 30 is W₃, and a distance between the second extension region 2113 and the first conductive plate 30 is W₄, where W₁ > W₃, and W₂ > W₄. This may also reduce a size proportion of the third recess R in the third direction D₃ and alleviate reduction of the heat dissipation area of the first region 2100 caused by provision of the third recess R. As shown in FIG. 9 and FIG. 10A, in some embodiments, W₁ is approximately equal to W₂, and W₃ is approximately equal to W₄.

As shown in FIG. 9 and FIG. 10A, in some embodiments, in the third direction D₃, the first extension region 2112 includes a ninth side 2114, and the second extension region 2113 includes a tenth side 2115. The ninth side 2114 is an inner edge of the first extension region 2112, and two ends of the ninth side 2114 are connected to the first lateral side R₁ and the fifth side 2101. The tenth side 2115 is an inner edge of the second extension region 2113, and two ends of the tenth side 2115 are connected to the second lateral side R₂ and the sixth side 2102. To be specific, viewed from the first direction D₁, the first region 2100 is connected to the ninth side 2114 and the tenth side 2115. The ninth side 2114 and the tenth side 2115 are in a straight line shape.

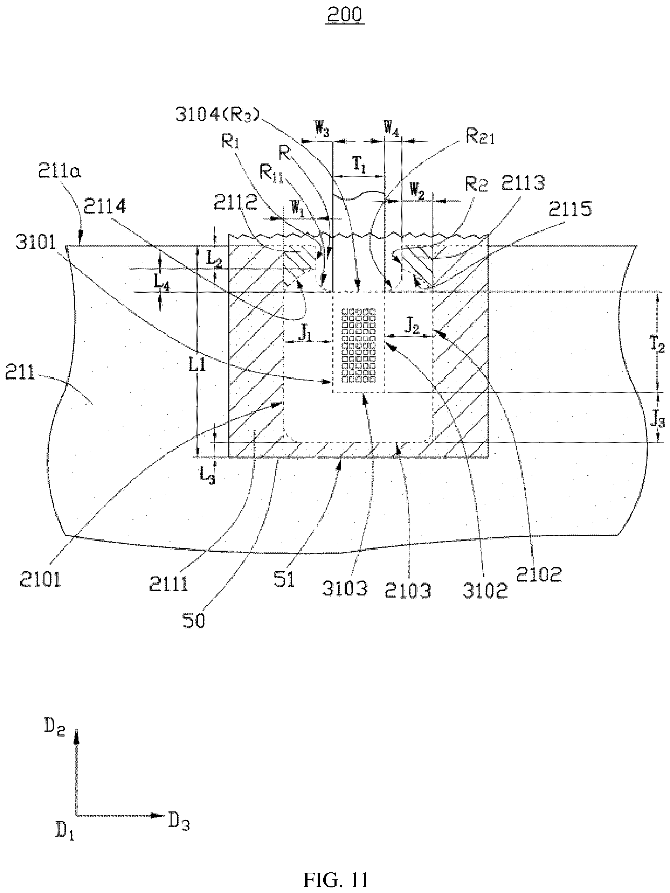

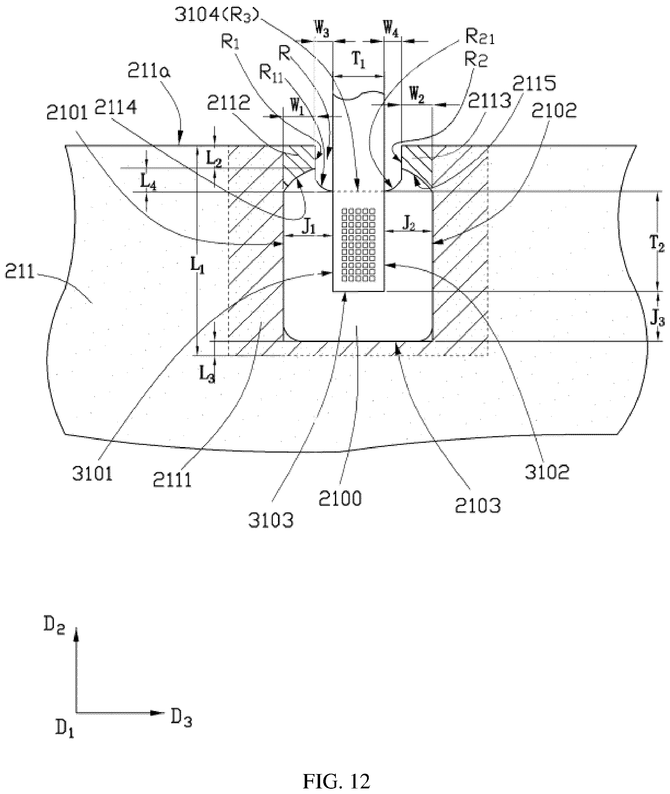

As shown in FIG. 11 and FIG. 12, in some other embodiments, the ninth side 2114 and the tenth side 2115 may alternatively be in a convex arc shape away from the first region 2100. In this case, an end of the ninth side 2114 is connected to the first lateral side R₁, and as compared with the embodiment shown in FIG. 10, the other end portion of the ninth side 2114 connected to the fifth side 2101 may move downward along a direction opposite to the second direction D₂. In addition, a region of the ninth side 2114 between the two end portions protrudes outward away from the first region 2100, so that the ninth side 2114 is in an arc shape. Similarly, an end of the tenth side 2115 is connected to the second lateral side R₂, and as compared with the embodiment shown in FIG. 10, the other end portion of the tenth side 2115 connected to the sixth side 2102 may move downward along a direction opposite to the second direction D₂. In addition, a region of the tenth side 2115 between the two end portions protrudes outward away from the first region 2100, so that the tenth side 2115 is in an arc shape.

In some embodiments, in the second direction D₂, the first extension region 2112 and the second extension region 2113 both have a size of L₂, and a distance between the ninth side 2114 and the fourth side 3104 is L₄, where L₂ < L₄. L₄ represents a distance between the end portion of the ninth side 2114 connected to the first lateral side R₁ and the fourth side 3104. L₄ may reflect a length of a portion of the first region 2100 exposed from a side of the fourth side 3104 of the first conductive plate 30. L₂ is defined to be < L₄, so that the relatively large L₄ helps to further increase the heat dissipation area of the first conductive plate 30, thereby reducing a temperature rise during large-current charging.

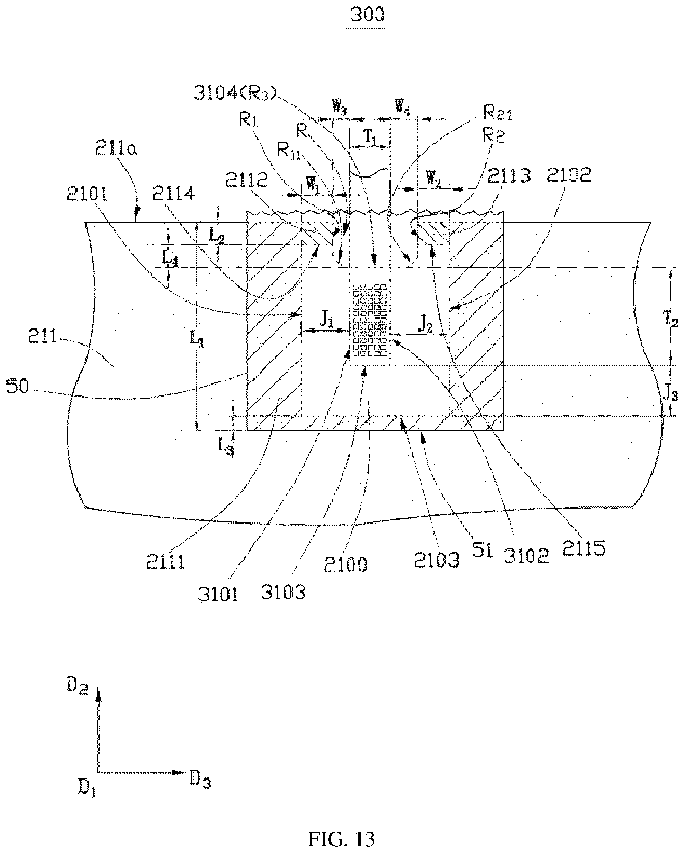

Referring to FIG. 13, a still another embodiment further provides an electrochemical apparatus 300. The electrochemical apparatus 300 differs from the electrochemical apparatus 200 in that in the third direction D₃, the first conductive plate 30 deviates from the central position of the first region 2100. In this case, W₃ < W₄. In some embodiments, W₃ < W₁. In some embodiments, W₂ < W₄.

The electrochemical apparatus 100 (or the electrochemical apparatus 200 or 300) includes all apparatuses in which an electrochemical reaction may take place. Specifically, the electrochemical apparatus 100 includes all kinds of primary batteries, secondary batteries, fuel batteries, solar batteries, or capacitors (for example, super capacitors). Optionally, the electrochemical apparatus 100 may be a lithium secondary battery, including a lithium metal secondary battery, a lithium-ion secondary battery, a lithium polymer secondary battery, and a lithium-ion polymer secondary battery.

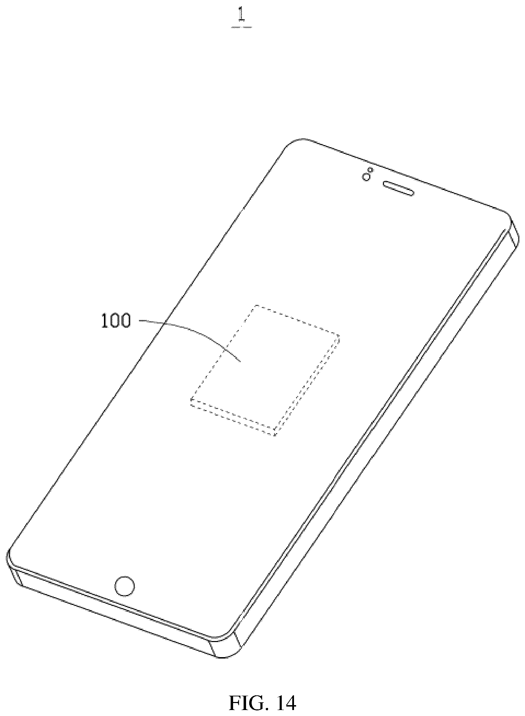

Referring to FIG. 14, an embodiment further provides an electronic apparatus 1. The electronic apparatus 1 includes the electrochemical apparatus 100 (or the electrochemical apparatus 200 or 300).

The electrochemical apparatus 100 is applicable to the electronic apparatuses 1 in various fields. In an embodiment, the electronic apparatus 1 may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

The following describes in detail with reference to specific examples and comparative examples. An example in which the electrochemical apparatus is a battery is used for describing with reference to specific test methods.

### Examples 1 to 4 and comparative example 1

On a cold-pressed first electrode plate, a first recess was formed by laser cleaning in a first conductive material layer, so that a first region was exposed from the first recess. No third recess was provided in the first region. Then, a first conductive plate was welded to the first region, with one welding spot. The area of the welding spot was S₂. Specific values of T₁, T₂, S₁, S₂, J₁, J₂, J₃, and L₃/L₁ were recorded in Table 1. The second electrode plate, the separator, the electrolyte, and the like adopted a conventional design.

In each of examples 1 to 4 and comparative example 1, the first electrode plate, the separator, and the second electrode plate were stacked, wound, and put into a housing. Then, the electrolyte was injected into the housing to obtain a battery with a size of 5.2 mm × 65.4 mm × 82.5 mm and a capacity of 5.0 Ah. Subsequently, each battery was quickly charged. Specifically, the charging process included: (1) the battery was constant-current charged to 4.25 V at 2.0C and constant-voltage discharged to 1.5C; (2) the battery was left standing for 5 min; (3) the battery was constant-current charged to 4.38 V at 1.5C and constant-voltage discharged to 1.0C; (4) the battery was left standing for 5 min; (5) the battery was constant-current charged to 4.43 V at 1.0C and constant-voltage discharged to 0.05C; and (6) the battery was left standing for 5 min. Before charging, a multi-channel thermometer was used to measure a temperature close to the position of the first conductive plate as t₁. After charging was completed, the multi-channel thermometer was used to measure a temperature close to the position of the first conductive plate as t₂, and a temperature rise Δt = t₂ - t₁, which was recorded in Table 1. In addition, it should be additionally noted that for a charging current of the battery, reference is generally made to rate C, where C is a value corresponding to the capacity of the battery. For example, when the capacity of the battery is 5.0 Ah, corresponding 1C is 5.0 A, and 2C is equal to 10.0 A.

**Table 1**

| | T₁ (mm) | T₂ (mm) | S₁ (mm) | S₂ (mm) | J₁ (mm) | J2 (mm) | J3 (mm) | K (%) | L₃/L₁ (%) | Δt (°C) |
|---|---|---|---|---|---|---|---|---|---|---|
| Example 1 | 6 | 30 | 180 | 108 | 2 | 3 | 3 | 75 | 18 | 9.6 |
| Example 2 | 6 | 29 | 174 | 72 | 2 | 1 | 1 | 56 | 15 | 10.3 |
| Example 3 | 6 | 29 | 174 | 72 | 1.5 | 1 | 1 | 56 | 30 | 12.1 |
| Example 4 | 6 | 30 | 180 | 40 | 2 | 1 | 1 | 33 | 15 | 13.0 |
| Comparative example 1 | 6 | 30 | 180 | 30 | 1 | 1 | 1 | 25 | 18 | 14.8 |

It may be learned from the data of Table 1 that as compared with comparative example 1, the batteries in examples 1 to 4 satisfy that the heat dissipation coefficient K ≥ 30%, so each battery has a small temperature rise after quickly charged. Moreover, a larger heat dissipation coefficient indicates a smaller temperature rise of the battery. In addition, in examples 2 and 3, the heat dissipation coefficients are the same; however, L₃/L₁ in example 2 is smaller, and therefore the temperature rise is smaller.

### Example 5 to 11

Examples 5 to 9 differ from examples 1 to 4 in that the first regions in examples 5 to 9 were each provided with a third recess, and specific values of T₁, T₂, S₁, S₂, J₁, J₂, J₃, and (L₂ + L₃)/L₁ were different and were recorded in Table 2, respectively.

Examples 10 and 11 differ from example 5 in that values of (L₂ + L₃)/L₁ in examples 10 and 11 were different and were recorded in Table 3, respectively.

In each of examples 5 to 9, the first electrode plate, the separator, and the second electrode plate were stacked, wound, and put into a housing. Then, the electrolyte was injected into the housing to obtain a battery with a size of 5.40 mm × 80.3 mm × 70.7 mm and a capacity of 5.2 Ah. Subsequently, each battery was quickly charged. Specifically, the charging process included: (1) the battery was constant-current charged to 4.25 V at 2.0C and constant-voltage discharged to 1.5C; (2) the battery was left standing for 5 min; (3) the battery was constant-current charged to 4.38 V at 1.5C and constant-voltage discharged to 1.0C; (4) the battery was left standing for 5 min; (5) the battery was constant-current charged to 4.43 V at 1.0C and constant-voltage discharged to 0.05C; and (6) the battery was left standing for 5 min. A temperature rise Δt at a position close to the first conductive plate before and after charging was measured, and the result was recorded in Table 2.

**Table 2**

| | T₁ (mm) | T₂ (mm) | S₁ (mm) | S₂ (mm) | J₁ (mm) | J₂ (mm) | J₃ (mm) | K (%) | (L₂+ L₃)/L₁ (%) | (W₁+ W₂)/T₁ (%) | Temperature rise (°C) |
|---|---|---|---|---|---|---|---|---|---|---|---|
| Example 5 | 6 | 20 | 120 | 56 | 2 | 2 | 6 | 85 | 11 | 67 | 12 |
| Example 6 | 6 | 20 | 120 | 56 | 2 | 2 | 2 | 70 | 11 | 67 | 13.1 |
| Example 7 | 6 | 18 | 108 | 16 | 2 | 2 | 3 | 44 | 11 | 67 | 14.2 |
| Example 8 | 6 | 20 | 120 | 12 | 2 | 2 | 2 | 33 | 11 | 67 | 14.7 |
| Example 9 | 6 | 18 | 108 | 24 | 3 | 2.5 | 3 | 58 | 11 | 67 | 13.9 |

It may be learned from the data of Table 2 that the batteries in examples 5 to 9 satisfy that the heat dissipation coefficient K ≥ 30%, so each battery has a small temperature rise after quickly charged. Moreover, a larger heat dissipation coefficient indicates a smaller temperature rise of the battery.

In each of examples 5, 10, and 11, the first electrode plate, the separator, and the second electrode plate were stacked, wound, and put into a housing. Then, the electrolyte was injected into the housing to obtain a battery with a size of 5.2 mm × 65.4 mm × 82.5 mm and a capacity of 5.0 Ah. Subsequently, each battery was quickly charged. Specifically, the charging process included: (1) the battery was constant-current charged to 4.05 V at 2.0C and constant-voltage discharged to 1.6C; (2) the battery was left standing for 5 min; (3) the battery was constant-current charged to 4.25 V at 1.6C and constant-voltage discharged to 1.2C; (4) the battery was left standing for 5 min; (5) the battery was constant-current charged to 4.35 V at 1.2C and constant-voltage discharged to 0.8C; (6) the battery was left standing for 5 min; (7) the battery was constant-current charged to 4.45 V at 0.8C, and constant-voltage discharged to 0.05C; and (8) the battery was left standing for 5 min. A temperature rise Δt at a position close to the first conductive plate before and after charging was measured, and the result was recorded in Table 3.

**Table 3**

| | T₁ (mm) | T₂ (mm) | S₁ (mm) | S₂ (mm) | J₁ (mm) | J₂ (mm) | J₃ (mm) | K (%) | (L₂ + L₃)/L₁ (%) | (W₁ + W₂)/T₁ (%) | Temperature rise (°C) |
|---|---|---|---|---|---|---|---|---|---|---|---|
| Example 5 | 6 | 20 | 120 | 56 | 2 | 2 | 6 | 85 | 11 | 67 | 9.1 |
| Example 10 | 6 | 20 | 120 | 56 | 2 | 2 | 6 | 85 | 33 | 67 | 12.5 |
| Example 11 | 6 | 20 | 120 | 56 | 2 | 2 | 6 | 85 | 20 | 67 | 10.3 |

It may be learned from the data of Table 3 that in examples 5, 10, and 11, the heat dissipation coefficients are the same; however, compared with example 10, examples 5 and 11 satisfy that (L₂ + L₃)/L₁ ≤ 30%, so the temperature rise is smaller; and the value of (L₂ + L₃)/L₁ in example 5 is the smallest, so the temperature rise is accordingly the smallest.

### Example 12 to 14

Examples 12 to 14 differ from example 5 in that the specific values of T₁, T₂, S₁, S₂, J₁, J₂, J₃, (L₂ + L₃)/L₁, and (W₁ + W₂)/T₁ in examples 12 to 14 were different and were recorded in Table 4, respectively.

In each of examples 5 and 12 to 14, the first electrode plate, the separator, and the second electrode plate were stacked, wound, and put into a housing. Then, the electrolyte was injected into the housing to obtain a battery with a size of 3.77 mm × 62.0 mm × 141.0 mm and a capacity of 5.2 Ah. Subsequently, each battery was quickly charged. Specifically, the charging process included: (1) the battery was constant-current charged to 4.2 V at 1.8C and constant-voltage discharged to 0.7C; (2) the battery was left standing for 5 min; (3) the battery was constant-current charged to 4.4 V at 0.7C and constant-voltage discharged to 0.05C; and (4) the battery was left standing for 5 min. A temperature rise Δt at a position close to the first conductive plate before and after charging was measured, and the result was recorded in Table 4.

**Table 4**

| | T₁ (mm) | T₂ (mm) | S₁ (mm) | S₂ (mm) | J₁ (mm) | J₂ (mm) | J₃ (mm) | K (%) | (L₂ + L₃)/L₁ (%) | (W₁ + W₂)/T₁ (%) | Temperature rise (°C) |
|---|---|---|---|---|---|---|---|---|---|---|---|
| Example 5 | 6 | 20 | 120 | 56 | 2 | 2 | 6 | 85 | 11 | 67 | 10.1 |
| Example 12 | 6 | 20 | 120 | 56 | 2 | 2 | 6 | 85 | 11 | 25 | 11 |
| Example 13 | 6 | 20 | 120 | 24 | 3 | 2 | 2.5 | 49 | 23 | 25 | 11.8 |
| Example 14 | 6 | 20 | 120 | 24 | 3 | 2 | 2.5 | 49 | 23 | 13 | 12.4 |

It may be learned from the data of Table 4 that compared with example 12, example 5 has the same heat dissipation coefficient K and same value of (L₂ + L₃)/L₁, but has a larger value of (W₁ + W₂)/T₁, and therefore has a smaller temperature rise. Compared with example 14, example 13 has the same heat dissipation coefficient K and same value of (L2 + L₃)/L₁, but has a larger value of (W₁ + W₂)/T₁, and therefore has a smaller temperature rise.

## Claims

1. An electrochemical apparatus (100), comprising an electrode assembly (20) and a first conductive plate (30), the electrode assembly (20) being of a wound structure and comprising a first electrode plate (21); **characterized in that**,
the first electrode plate (21) comprises a first conductive layer (210) and a first conductive material layer (211); the first conductive layer (210) comprises a first surface (210a) and a second surface (210b) opposite to each other; the first conductive material layer (211) is provided on the first surface (210a); the first surface (210a) comprises a first region (2100); the first conductive material layer (211) comprises a first conductive material region (2111), the first conductive material region (2111) encloses a first recess (2110); the first region (2100) is exposed from the first recess (2110); and the first conductive plate (30) is connected to the first region (2100) and extends out of the first electrode plate (21);
the first conductive plate (30) comprises a third region (31) and a fourth region (32) connected to each other; a direction perpendicular to the third region (31) is a first direction (D₁); in the first direction (D₁), a projection of the third region (31) is located in a projection of the first region (2100); a projection of the fourth region (32) is located outside the projection of the first region (2100); the third region (31) comprises a connection region (311); and the first conductive plate (30) is connected to the first region (2100) through the connection region (311);
viewed from the first direction (D₁), the third region (31) comprises a first side (3101), a second side (3102), a third side (3103), and a fourth side (3104); the first side (3101) and the second side (3102) being opposite to each other, the third side (3103) and the fourth side (3104) being opposite to each other, and the fourth side (3104) being connected to the fourth region (32); the first region (2100) comprises a fifth side (2101), a sixth side (2102), and a seventh side (2103); an extension direction of the third region (31) is a second direction (D₂); in the second direction (D₂), the seventh side (2103) and the third side (3103) are arranged in sequence and the seventh side (2103) and the third side (3103) at least partially face each other; in a third direction (D₃), the fifth side (2101), the first side (3101), the second side (3102), and the sixth side (2102) are arranged in sequence; and the first direction (D₁), the second direction (D₂), and the third direction (D₃) are perpendicular to each other;
a size of the third region (31) in the third direction (D₃) is T₁, a size of the third region (31) in the second direction (D₂) is T₂, an area of the projection of the third region (31) in the first direction (D₁) is S₁, an area of a projection of the connection region (311) in the first direction (D₁) is S₂, a distance between the first side (3101) and the fifth side (2101) is J₁, a distance between the second side (3102) and the sixth side (2102) is J₂, and a distance between the third side (3103) and the seventh side (2103) is J₃, wherein S₂/S₁ + (J₁ + J₂ + J₃)/(T₁ + T₂) ≥ 30%; **characterized in that**
the first region (2100) is provided with a third recess (R) at an edge in the second direction (D₂); the first conductive material region (2111) comprises a first extension region (2112) and a second extension region (2113) extending toward the third recess (R); and viewed from the first direction (D₁), the first extension region (2112) and the second extension region (2113) are disposed on two sides of the third recess (R).

2. The electrochemical apparatus (100) according to claim 1, wherein the first electrode plate (21) further comprises a second conductive material layer (212) provided on the second surface (210b); the second surface (210b) comprises a second region (2105); the second conductive material layer (212) comprises a second conductive material region (2121), the second conductive material region (2121) encloses a second recess (2120); the second region (2105) is exposed from the second recess (2120); and in the first direction (D₁), the projection of the first region (2100) and a projection of the second region (2105) at least partially overlap.

3. The electrochemical apparatus (100) according to claim 2, further comprising a first layer (50) adhered to the third region (31); the first layer (50) contains an insulating material; and in the first direction (D₁), the projection of the third region (31) is located in a projection of the first layer (50).

4. The electrochemical apparatus (100) according to claim 3, wherein the first layer (50) is further adhered to the first conductive material region (2111); and in the first direction (D₁), the projection of the first region (2100) is located in the projection of the first layer (50).

5. The electrochemical apparatus (100) according to claim 4, further comprising a second layer (60); the second layer (60) contains a first insulating material; the second layer (60) is adhered to the second conductive material region (2121); and in the first direction (D₁), the projection of the second region (2105) is located in a projection of the second layer (60); and/or
viewed from the first direction (D₁), the first layer (50) comprises an eighth side (51); in the second direction (D₂), the seventh side (2103) is disposed between the eighth side (51) and the third side (3103); and a distance between an edge of the first region (2100) in the second direction (D₂) and the eighth side (51) is L₁, and a distance between the seventh side (2103) and the eighth side (51) is L₃, wherein L₃/L₁ ≤ 30%; and/or
viewed from the first direction (D₁), the first layer (50) comprises an eighth side (51); in the second direction (D₂), the seventh side (2103) is disposed between the eighth side (51) and the third side (3103); and a distance between an edge of the first region (2100) in the second direction (D₂) and the eighth side (51) is L₁, the first extension region (2112) and the second extension region (2113) have a same size of L₂ in the second direction (D₂), and a distance between the seventh side (2103) and the eighth side (51) is L₃, wherein (L₂ + L₃)/L₁ ≤ 30%.

6. The electrochemical apparatus (100) according to claim 1, wherein a size of the first extension region (2112) in the third direction (D₃) is W₁, and a size of the second extension region (2113) in the third direction (D₃) is W₂, wherein (W₁ + W₂)/T₁ ≥ 20%.

7. The electrochemical apparatus (100) according to claim 1, wherein a size of the first extension region (2112) in the third direction (D₃) is W₁, a size of the second extension region (2113) in the third direction (D₃) is W₂, a distance between the first extension region (2112) and the first conductive plate (30) in the third direction (D₃) is W₃, and a distance between the second extension region (2113) and the first conductive plate (30) in the third direction (D₃) is W₄, wherein at least one of the following conditions are satisfied:
W₃ < W₁, W₂ < W₄, or W₃ < W₄.

8. The electrochemical apparatus (100) according to claim 1, wherein in the third direction (D₃), the first extension region (2112) and the second extension region (2113) respectively comprises a ninth side (2114) and a tenth side (2115), and the first region (2100) is connected to the ninth side (2114) and the tenth side (2115); and
the ninth side (2114) and the tenth side (2115) are in a straight line shape or an arc shape.

9. The electrochemical apparatus (100) according to claim 8, wherein in the second direction (D₂), the first extension region (2112) and/or the second extension region (2113) has a size of L₂, and a distance between the ninth side (2114) and the fourth side (3104) is L₄, wherein L₂ < L₄.

10. The electrochemical apparatus (100) according to claim 5, wherein L₁ ranges from 10 mm to 50 mm; and/or
in the second direction (D₂), an edge of at least one of the first layer (50) or the second layer (60) extends beyond an edge of the first electrode plate (21).

11. The electrochemical apparatus (100) according to claim 5, further comprising a third layer (70) and a fourth layer (80); the third layer (70) and the fourth layer (80) each contains a second insulating material; and in the first direction (D₁), the first layer (50) is disposed between the first conductive plate (30) and the third layer (70), and the second layer (60) is disposed between the first conductive plate (30) and the fourth layer (80).

12. The electrochemical apparatus (100) according to claim 11, wherein the electrode assembly (20) further comprises a second electrode plate (22), and at least one of the third layer (70) or the fourth layer (80) is adhered to the second electrode plate (22).

13. The electrochemical apparatus (100) according to claim 1, wherein the connection region (311) is welded to the first region (2100); the connection region (311) comprises a plurality of welding spots (3110); and the area S₂ is a sum of projection areas of the plurality of welding spots (3110) in the first direction (D₁).

14. The electrochemical apparatus (100) according to claim 1, wherein the electrode assembly (20) further comprises a second electrode plate (22) and a separator (23); the first electrode plate (21), the separator (23), and the second electrode plate (22) are stacked and wound to form the electrode assembly (20); and in a winding direction (D), the electrode assembly (20) comprises a first section (201), a first bent section (202), a second section (203), and a second bent section (204) connected in sequence, and the first conductive plate (30) is located at the first section (201); and/or
further comprising a housing (10); wherein the housing (10) comprises a body (11) for accommodating the electrode assembly (20) and a sealing edge (12) connected to the body (11), wherein the sealing edge (12) comprises a polymer layer, and the fourth region (32) extends out of the housing (10) from the polymer layer.

15. An electronic apparatus (1), comprising the electrochemical apparatus (100) according to any one of claims 1 to 14.

## Patentansprüche

1. Elektrochemische Vorrichtung (100), umfassend eine Elektrodenbaugruppe (20) und eine erste leitfähige Platte (30), wobei die Elektrodenbaugruppe (20) eine Wickelstruktur aufweist und eine erste Elektrodenplatte (21) umfasst; **dadurch gekennzeichnet, dass**
die erste Elektrodenplatte (21) eine erste leitfähige Schicht (210) und eine erste leitfähige Materialschicht (211) umfasst; die erste leitfähige Schicht (210) eine erste Oberfläche (210a) und eine zweite Oberfläche (210b) umfasst, die einander gegenüberliegen; die erste leitfähige Materialschicht (211) auf der ersten Oberfläche (210a) vorgesehen ist; die erste Oberfläche (210a) einen ersten Bereich (2100) umfasst; die erste leitfähige Materialschicht (211) einen ersten leitfähigen Materialbereich (2111) umfasst, der erste leitfähige Materialbereich (2111) eine erste Aussparung (2110) umschließt; der erste Bereich (2100) von der ersten Aussparung (2110) freigelegt ist; und die erste leitfähige Platte (30) mit dem ersten Bereich (2100) verbunden ist und sich aus der ersten Elektrodenplatte (21) heraus erstreckt;
die erste leitfähige Platte (30) einen dritten Bereich (31) und einen vierten Bereich (32) umfasst, die miteinander verbunden sind; eine Richtung senkrecht zu dem dritten Bereich (31) eine erste Richtung (D₁) ist; eine Projektion des dritten Bereichs (31) sich in der ersten Richtung (D₁) in einer Projektion des ersten Bereichs (2100) befindet; eine Projektion des vierten Bereichs (32) sich außerhalb der Projektion des ersten Bereichs (2100) befindet; der dritte Bereich (31) einen Verbindungsbereich (311) umfasst; und die erste leitfähige Platte (30) über den Verbindungsbereich (311) mit dem ersten Bereich (2100) verbunden ist;
aus der ersten Richtung (D₁) gesehen der dritte Bereich (31) eine erste Seite (3101), eine zweite Seite (3102), eine dritte Seite (3103) und eine vierte Seite (3104) umfasst; wobei die erste Seite (3101) und die zweite Seite (3102) sich einander gegenüberliegen, wobei die dritte Seite (3103) und die vierte Seite (3104) sich einander gegenüberliegen, und wobei die vierte Seite (3104) mit dem vierten Bereich (32) verbunden ist; der erste Bereich (2100) eine fünfte Seite (2101), eine sechste Seite (2102) und eine siebte Seite (2103) umfasst; eine Erstreckungsrichtung des dritten Bereichs (31) eine zweite Richtung (D₂) ist; in der zweiten Richtung (D₂) die siebte Seite (2103) und die dritte Seite (3103) nacheinander angeordnet sind und die siebte Seite (2103) und die dritte Seite (3103) einander mindestens teilweise zugewandt sind; in einer dritten Richtung (D₃) die fünfte Seite (2101), die erste Seite (3101), die zweite Seite (3102) und die sechste Seite (2102) nacheinander angeordnet sind; und die erste Richtung (D₁), die zweite Richtung (D₂) und die dritte Richtung (D₃) senkrecht zueinander sind;
eine Größe des dritten Bereichs (31) in der dritten Richtung (D₃) T₁ ist, eine Größe des dritten Bereichs (31) in der zweiten Richtung (D₂) T₂ ist, ein Bereich der Projektion des dritten Bereichs (31) in der ersten Richtung (D₁) S₁ ist, ein Bereich einer Projektion des Verbindungsbereichs (311) in der ersten Richtung (D₁) S₂ ist, ein Abstand zwischen der ersten Seite (3101) und der fünften Seite (2101) J₁ ist, ein Abstand zwischen der zweiten Seite (3102) und die sechste Seite (2102) J₂ ist, und ein Abstand zwischen der dritten Seite (3103) und der siebten Seite (2103) J₃ ist, wobei S₂/S₁ + (J₁ + J₂ + J₃ )/(T₁ + T₂) ≥ 30 %; **dadurch gekennzeichnet, dass**
der erste Bereich (2100) mit einer dritten Aussparung (R) an einer Kante in der zweiten Richtung (D₂) versehen ist; der erste leitfähige Materialbereich (2111) einen ersten Erstreckungsbereich (2112) und einen zweiten Erstreckungsbereich (2113) umfasst, die sich in Richtung der dritten Aussparung (R) erstrecken; und aus der ersten Richtung (D₁) gesehen der erste Erstreckungsbereich (2112) und der zweite Erstreckungsbereich (2113) auf zwei Seiten der dritten Aussparung (R) angeordnet sind.

2. Elektrochemische Vorrichtung (100) nach Anspruch 1, wobei die erste Elektrodenplatte (21) ferner eine zweite leitfähige Materialschicht (212) umfasst, die auf der zweiten Oberfläche (210b) vorgesehen ist; die zweite Oberfläche (210b) einen zweiten Bereich (2105) umfasst; die zweite leitfähige Materialschicht (212) einen zweiten leitfähigen Materialbereich (2121) umfasst, der zweite leitfähige Materialbereich (2121) eine zweite Aussparung (2120) umschließt; der zweite Bereich (2105) von der zweiten Aussparung (2120) freigelegt ist; und die Projektion des ersten Bereichs (2100) und eine Projektion des zweiten Bereichs (2105) sich in der ersten Richtung (D₁) mindestens teilweise überlappen.

3. Elektrochemische Vorrichtung (100) nach Anspruch 2, ferner umfassend eine erste Schicht (50), die an dem dritten Bereich (31) haftet; wobei die erste Schicht (50) ein Isoliermaterial enthält; und die Projektion des dritten Bereichs (31) sich in der ersten Richtung (D₁) in einer Projektion der ersten Schicht (50) befindet.

4. Elektrochemische Vorrichtung (100) nach Anspruch 3, wobei die erste Schicht (50) weiter an dem ersten leitfähigen Materialbereich (2111) haftet; und die Projektion des ersten Bereichs (2100) sich in der ersten Richtung (D₁) in der Projektion der ersten Schicht (50) befindet.

5. Elektrochemische Vorrichtung (100) nach Anspruch 4, die ferner eine zweite Schicht (60) umfasst; wobei die zweite Schicht (60) ein erstes Isoliermaterial enthält; die zweite Schicht (60) an dem zweiten leitfähigen Materialbereich (2121) haftet; und die Projektion des zweiten Bereichs (2105) sich in der ersten Richtung (D₁) in einer Projektion der zweiten Schicht (60) befindet; und/oder
aus der ersten Richtung (D₁) gesehen die erste Schicht (50) eine achte Seite (51) umfasst; die siebte Seite (2103) in der zweiten Richtung (D₂) zwischen der achten Seite (51) und der dritten Seite (3103) angeordnet ist; und ein Abstand zwischen einer Kante des ersten Bereichs (2100) in der zweiten Richtung (D₂) und der achten Seite (51) L₁ ist, und ein Abstand zwischen der siebten Seite (2103) und der achten Seite (51) L₃ ist, wobei L₃/L₁ ≤ 30 % ist; und/oder
aus der ersten Richtung (D₁) gesehen die erste Schicht (50) eine achte Seite (51) umfasst; die siebte Seite (2103) in der zweiten Richtung (D₂) zwischen der achten Seite (51) und der dritten Seite (3103) angeordnet ist; und ein Abstand zwischen einer Kante des ersten Bereichs (2100) in der zweiten Richtung (D₂) und der achten Seite (51) L₁ ist, der erste Erstreckungsbereich (2112) und der zweite Erstreckungsbereich (2113) die gleiche Größe von L₂ in der zweiten Richtung (D₂) haben, und ein Abstand zwischen der siebten Seite (2103) und der achten Seite (51) L₃ ist, wobei (L₂ + L₃ )/L₁ ≤ 30 % ist.

6. Elektrochemische Vorrichtung (100) nach Anspruch 1, wobei eine Größe des ersten Erstreckungsbereichs (2112) in der dritten Richtung (D₃) W₁ ist und eine Größe des zweiten Erstreckungsbereichs (2113) in der dritten Richtung (D₃) W₂ ist, wobei (W₁+W₂)/T₁ ≥ 20 %.

7. Elektrochemische Vorrichtung (100) nach Anspruch 1, wobei eine Größe des ersten Erstreckungsbereichs (2112) in der dritten Richtung (D₃) W₁ ist, eine Größe des zweiten Erstreckungsbereichs (2113) in der dritten Richtung (D₃) W₂ ist, ein Abstand zwischen dem ersten Erstreckungsbereich (2112) und der ersten leitfähigen Platte (30) in der dritten Richtung (D₃) W₃ ist und ein Abstand zwischen dem zweiten Erstreckungsbereich (2113) und der ersten leitfähigen Platte (30) in der dritten Richtung (D₃) W₄ ist, wobei mindestens eine der folgenden Bedingungen erfüllt ist: W₃ < W₁, W₂ < W₄ oder W₃ < W₄.

8. Elektrochemische Vorrichtung (100) nach Anspruch 1, wobei in der dritten Richtung (D₃) der erste Erstreckungsbereich (2112) und der zweite Erstreckungsbereich (2113) jeweils eine neunte Seite (2114) und eine zehnte Seite (2115) umfassen, und der erste Bereich (2100) mit der neunten Seite (2114) und der zehnten Seite (2115) verbunden ist; und
die neunte Seite (2114) und die zehnte Seite (2115) eine gerade Linienform oder eine Bogenform haben.

9. Elektrochemische Vorrichtung (100) nach Anspruch 8, wobei in der zweiten Richtung (D₂) der erste Erstreckungsbereich (2112) und/oder der zweite Erstreckungsbereich (2113) eine Größe von L₂ aufweist und ein Abstand zwischen der neunten Seite (2114) und der vierten Seite (3104) L₄ ist, wobei L₂ < L₄ ist.

10. Elektrochemische Vorrichtung (100) nach Anspruch 5, wobei L₁ von 10 mm bis 50 mm reicht; und/oder
eine Kante von mindestens einer der ersten Schicht (50) oder der zweiten Schicht (60) sich in der zweiten Richtung (D₂) eine Kante der ersten Elektrodenplatte (21) hinaus erstreckt.

11. Elektrochemische Vorrichtung (100) nach Anspruch 5, die ferner eine dritte Schicht (70) und eine vierte Schicht (80) umfasst; die dritte Schicht (70) und die vierte Schicht (80) jeweils ein zweites Isoliermaterial enthalten; und die erste Schicht (50) in der ersten Richtung (D₁) zwischen der ersten leitfähigen Platte (30) und der dritten Schicht (70) angeordnet ist, und die zweite Schicht (60) zwischen der ersten leitfähigen Platte (30) und der vierten Schicht (80) angeordnet ist.

12. Elektrochemische Vorrichtung (100) nach Anspruch 11, wobei die Elektrodenbaugruppe (20) ferner eine zweite Elektrodenplatte (22) umfasst, und mindestens eine der dritten Schicht (70) oder der vierten Schicht (80) an der zweiten Elektrodenplatte (22) haftet.

13. Elektrochemische Vorrichtung (100) nach Anspruch 1, wobei der Verbindungsbereich (311) mit dem ersten Bereich (2100) verschweißt ist; der Verbindungsbereich (311) eine Vielzahl von Schweißpunkten (3110) umfasst; und der Bereich S₂ eine Summe von Projektionsbereichen der Vielzahl von Schweißpunkten (3110) in der ersten Richtung (D₁) ist.

14. Elektrochemische Vorrichtung (100) nach Anspruch 1, wobei die Elektrodenbaugruppe (20) ferner eine zweite Elektrodenplatte (22) und einen Separator (23) umfasst; die erste Elektrodenplatte (21), der Separator (23) und die zweite Elektrodenplatte (22) gestapelt und gewickelt sind, um die Elektrodenbaugruppe (20) zu bilden; und die Elektrodenbaugruppe (20) in einer Wickelrichtung (D) einen ersten Abschnitt (201), einen ersten gebogenen Abschnitt (202), einen zweiten Abschnitt (203) und einen zweiten gebogenen Abschnitt (204) umfasst, die nacheinander verbunden sind, und die erste leitfähige Platte (30) sich an dem ersten Abschnitt (201) befindet; und/oder
ferner umfassend ein Gehäuse (10); wobei das Gehäuse (10) einen Körper (11) zur Aufnahme der Elektrodenbaugruppe (20) und eine mit dem Körper (11) verbundene Dichtungskante (12) umfasst, wobei die Dichtungskante (12) eine Polymerschicht umfasst, und der vierte Bereich (32) sich aus dem Gehäuse (10) aus der Polymerschicht heraus erstreckt.

15. Elektronische Vorrichtung (100), die die elektrochemische Vorrichtung (1) nach einem der Ansprüche 1 bis 14 umfasst.

## Revendications

1. Appareil électrochimique (100), comprenant un ensemble d'électrodes (20) et une première plaque conductrice (30), l'ensemble d'électrodes (20) présentant une structure enroulée et comprenant une première plaque d'électrode (21) ; **caractérisé en ce que**
la première plaque d'électrode (21) comprend une première couche conductrice (210) et une première couche de matériau conducteur (211) ; la première couche conductrice (210) comporte une première surface (210a) et une deuxième surface (210b) opposées l'une à l'autre; la première couche de matériau conducteur (211) est disposée sur la première surface (210a) ; la première surface (210a) comprend une première zone (2100) ; la première couche de matériau conducteur (211) comprend une première région de matériau conducteur (2111), la première région de matériau conducteur (2111) entourant un premier évidement (2110) ; la première zone (2100) est exposée depuis le premier évidement (2110) ;
la première plaque conductrice (30) est connectée à la première zone (2100) et s'étend hors de la première plaque d'électrode (21) ; la première plaque conductrice (30) comprend une troisième zone (31) et une quatrième zone (32) reliées l'une à l'autre ; une direction perpendiculaire à la troisième zone (31) est une première direction (D1) ; dans la première direction (D1), une projection de la troisième zone (31) est située dans une projection de la première zone (2100) ; une projection de la quatrième zone (32) est située en dehors de la projection de la première zone (2100) ; la troisième zone (31) comprend une région de connexion (311) ; la première plaque conductrice (30) est connectée à la première zone (2100) par l'intermédiaire de la région de connexion (311) ;
vue depuis la première direction (D1), la troisième zone (31) comprend un premier côté (3101), un deuxième côté (3102), un troisième côté (3103) et un quatrième côté (3104) ; le premier côté (3101) et le deuxième côté (3102) sont opposés l'un à l'autre, le troisième côté (3103) et le quatrième côté (3104) sont opposés l'un à l'autre, et le quatrième côté (3104) est relié à la quatrième zone (32) ; la première zone (2100) comprend un cinquième côté (2101), un sixième côté (2102) et un septième côté (2103) ; une direction d'extension de la troisième zone (31) est une deuxième direction (D2) ; dans la deuxième direction (D2), le septième côté (2103) et le troisième côté (3103) sont disposés en séquence et le septième côté (2103) et le troisième côté (3103) se font au moins partiellement face ; dans une troisième direction (D3), le cinquième côté (2101), le premier côté (3101), le deuxième côté (3102) et le sixième côté (2102) sont disposés en séquence ; la première direction (D1), la deuxième direction (D2) et la troisième direction (D3) sont perpendiculaires les unes aux autres ;
une taille de la troisième zone (31) dans la troisième direction (D3) est T1, une taille de la troisième zone (31) dans la deuxième direction (D2) est T2, une surface de la projection de la troisième zone (31) dans la première direction (D1) est S1, une surface d'une projection de la région de connexion (311) dans la première direction (D1) est S2, une distance entre le premier côté (3101) et le cinquième côté (2101) est J1, une distance entre le deuxième côté (3102) et le sixième côté (2102) est J2, et une distance entre le troisième côté (3103) et le septième côté (2103) est J3, où S2/S1 + (J1 + J2 + J3)/(T1 + T2) ≥ 30% ; **caractérisé en ce que**
la première zone (2100) est pourvue d'un troisième évidement (R) au niveau d'un bord dans la deuxième direction (D2) ; la première région de matériau conducteur (2111) comprend une première région d'extension (2112) et une deuxième région d'extension (2113) s'étendant vers le troisième évidement (R) ; et vue depuis la première direction (D1), la première région d'extension (2112) et la deuxième région d'extension (2113) sont disposées sur deux côtés du troisième évidement (R).

2. Appareil électrochimique (100) selon la revendication 1, dans lequel : la première plaque d'électrode (21) comprend en outre une deuxième couche de matériau conducteur (212) disposée sur la deuxième surface (210b) ; la deuxième surface (210b) comprend une deuxième zone (2105) ; la deuxième couche de matériau conducteur (212) comprend une deuxième région de matériau conducteur (2121), la deuxième région de matériau conducteur (2121) entourant un deuxième évidement (2120) ; la deuxième zone (2105) est exposée depuis le deuxième évidement (2120) ; dans la première direction (D1), la projection de la première zone (2100) et une projection de la deuxième zone (2105) se chevauchent au moins partiellement.

3. Appareil électrochimique (100) selon la revendication 2, comprenant en outre une première couche (50) adhérée à la troisième zone (31) ; la première couche (50) contient un matériau isolant ; dans la première direction (D1), la projection de la troisième zone (31) est située dans une projection de la première couche (50).

4. Appareil électrochimique (100) selon la revendication 3, dans lequel la première couche (50) est en outre adhérée à la première région de matériau conducteur (2111) ; et dans la première direction (D1), la projection de la première zone (2100) est située dans la projection de la première couche (50).

5. Appareil électrochimique (100) selon la revendication 4, comprenant en outre une deuxième couche (60) ; la deuxième couche (60) contient un premier matériau isolant ;
la deuxième couche (60) est adhérée à la deuxième région de matériau conducteur (2121) ; et dans la première direction (D1), la projection de la deuxième zone (2105) est située dans une projection de la deuxième couche (60) ; et/ou
vue depuis la première direction (D1), la première couche (50) comprend un huitième côté (51) ; dans la deuxième direction (D2), le septième côté (2103) est disposé entre le huitième côté (51) et le troisième côté (3103) ; une distance entre un bord de la première zone (2100) dans la deuxième direction (D2) et le huitième côté (51) est L1, et une distance entre le septième côté (2103) et le huitième côté (51) est L3, où L3/L1 ≤ 30%; et/ou
vue depuis la première direction (D1), la première couche (50) comprend un huitième côté (51) ; dans la deuxième direction (D2), le septième côté (2103) est disposé entre le huitième côté (51) et le troisième côté (3103) ; une distance entre un bord de la première zone (2100) dans la deuxième direction (D2) et le huitième côté (51) est L1, la première région d'extension (2112) et la deuxième région d'extension (2113) ont une même taille L2 dans la deuxième direction (D2), et une distance entre le septième côté (2103) et le huitième côté (51) est L3, où (L2 + L3)/L1 ≤ 30%.

6. Appareil électrochimique (100) selon la revendication 1, dans lequel une taille de la première région d'extension (2112) dans la troisième direction (D3) est W1, et une taille de la deuxième région d'extension (2113) dans la troisième direction (D3) est W2, où (W1 + W2)/T1 ≥ 20%.

7. Appareil électrochimique (100) selon la revendication 1, dans lequel une taille de la première région d'extension (2112) dans la troisième direction (D3) est W1, une taille de la deuxième région d'extension (2113) dans la troisième direction (D3) est W2, une distance entre la première région d'extension (2112) et la première plaque conductrice (30) dans la troisième direction (D3) est W3, et une distance entre la deuxième région d'extension (2113) et la première plaque conductrice (30) dans la troisième direction (D3) est W4, où au moins l'une des conditions suivantes est satisfaite : W3 < W1, W2 < W4, ou W3 < W4.

8. Appareil électrochimique (100) selon la revendication 1, dans lequel : dans la troisième direction (D3), la première région d'extension (2112) et la deuxième région d'extension (2113) comprennent respectivement un neuvième côté (2114) et un dixième côté (2115), et la première zone (2100) est connectée au neuvième côté (2114) et au dixième côté (2115) ;
le neuvième côté (2114) et le dixième côté (2115) sont en forme de ligne droite ou d'arc.

9. Appareil électrochimique (100) selon la revendication 8, dans lequel dans la deuxième direction (D2), la première région d'extension (2112) et/ou
la deuxième région d'extension (2113) a une taille de L2, et une distance entre le neuvième côté (2114) et le quatrième côté (3104) est L4, où L2 < L4.

10. Appareil électrochimique (100) selon la revendication 5, dans lequel : L1 varie de 10 mm à 50 mm ; et/ou
dans la deuxième direction (D2), un bord d'au moins l'une de la première couche (50) ou de la deuxième couche (60) s'étend au-delà d'un bord de la première plaque d'électrode (21).

11. Appareil électrochimique (100) selon la revendication 5, comprenant en outre une troisième couche (70) et une quatrième couche (80) ; la troisième couche (70) et la quatrième couche (80) contiennent chacune un deuxième matériau isolant ; et dans la première direction (D1), la première couche (50) est disposée entre la première plaque conductrice (30) et la troisième couche (70), et la deuxième couche (60) est disposée entre la première plaque conductrice (30) et la quatrième couche (80).

12. Appareil électrochimique (100) selon la revendication 11, dans lequel l'ensemble d'électrodes (20) comprend en outre une deuxième plaque d'électrode (22), et au moins l'une de la troisième couche (70) ou de la quatrième couche (80) est adhérée à la deuxième plaque d'électrode (22).

13. Appareil électrochimique (100) selon la revendication 1, dans lequel : la région de connexion (311) est soudée à la première zone (2100) ; la région de connexion (311) comprend une pluralité de points de soudure (3110) ; et la surface S2 est une somme des surfaces de projection de la pluralité de points de soudure (3110) dans la première direction (D1).

14. Appareil électrochimique (100) selon la revendication 1, dans lequel l'ensemble d'électrodes (20) comprend en outre une deuxième plaque d'électrode (22) et un séparateur (23) ; la première plaque d'électrode (21), le séparateur (23) et la deuxième plaque d'électrode (22) sont empilés et enroulés pour former l'ensemble d'électrodes (20) ; dans une direction d'enroulement (D), l'ensemble d'électrodes (20) comprend une première section (201), une première section courbée (202), une deuxième section (203) et une deuxième section courbée (204) reliées en séquence, et la première plaque conductrice (30) est située au niveau de la première section (201) ; et/ou
comprenant en outre un boîtier (10) ; le boîtier (10) comprend un corps (11) pour loger l'ensemble d'électrodes (20) et un bord d'étanchéité (12) relié au corps (11), où le bord d'étanchéité (12) comprend une couche polymère, et la quatrième zone (32) s'étend hors du boîtier (10) depuis la couche polymère.

15. Appareil électronique (1), comprenant l'appareil électrochimique (100) selon l'une quelconque des revendications 1 à 14.
